# FASCICULE DE BREVET EUROPEEN

(11) **EP 3 774 650 B1**
(45) Date de publication et mention de la délivrance du brevet: **16.08.2023**
(21) Numéro de dépôt: 19713470.3
(22) Date de dépôt: 27.03.2019
(51) Int. Cl.: C01B 25/24, B01J 10/00, B01J 19/00, B01J 19/24, B01J 19/26, B01J 8/02, B01J 19/30, C08G 79/04

(54) **PROCEDE DE RECYCLAGE DE SOLUTIONS RESIDUAIRES COMPRENANT DU PHOSPHORE ET DISPOSITIF POUR UN TEL PROCEDE**
VERFAHREN ZUM RECYCLING VON PHOSPHOR ENTHALTENDEN LÖSUNGSRÜCKSTÄNDEN UND VORRICHTUNG ZUR DURCHFÜHRUNG DES VERFAHRENS
METHOD FOR RECYCLING RESIDUAL SOLUTIONS COMPRISING PHOSPHORUS AND DEVICE FOR SUCH A METHOD

(30) Priorité: 30.03.2018 BE 201805218; 20.12.2018 BE 201805916
(43) Date de publication de la demande: 17.02.2021
(73) Titulaire: Prayon, 4480 Engis (BE)
(72) Inventeur: HEPTIA, Bernard, 4480 Engis (BE); SZÖCS, Carl, 4480 Engis (BE); LERUTH, Denis, 4480 Engis (BE); GABRIEL, Damien, 4480 Engis (BE)
(74) Mandataire: Connor, Marco Tom
(86) Numéro de dépôt international: PCT/EP2019/057706
(87) Numéro de publication internationale: WO 2019/185702

(56) Documents cités:
- EP-B1- 1 421 030
- EP-B1- 2 411 325
- US-A- 3 272 597

## Description

### DOMAINE DE L'INVENTION

La présente invention se rapporte à un procédé et à un dispositif de purification de solutions résiduaires d'acide phosphorique issues par exemple de procédés industriels ou agro-industriels et comprenant du phosphore sous la forme d'espèces de type orthophosphate et / ou polyphosphate ainsi que des matières volatilisables indésirables qui rendent leur utilisation ultérieure difficile, voire impossible. Le procédé de la présente invention est particulièrement efficace et permet de nettoyer les solutions résiduaires d'acide phosphorique de leurs matières volatilisables indésirables et, le cas échéant, de produire des solutions d'acide phosphorique à des concentrations élevées tout en limitant la consommation énergétique nécessaire à la production de solutions d'acide phosphorique ou polyphosphorique purifié. La présente invention permet une meilleure gestion des gaz de combustion produits par le procédé avant leur évacuation dans l'atmosphère.

### ARRIERE-PLAN TECHNOLOGIQUE

De nombreux procédés industriels ou agro-industriels génèrent des solutions résiduaires aqueuses comprenant du phosphore. Ces solutions sont qualifiées de résiduaires car elles ne peuvent être utilisées sans traitement préalable dans ces mêmes industries. Le phosphore de ces solutions peut être présent sous forme d'espèces de type orthophosphate ou de type polyphosphate selon la teneur en P₂O₅ de ces solutions. A cause de la présence dans ces solutions de matières volatilisables indésirables dissoutes telles que le fluor, le soufre, le carbone, etc., ces solutions résiduaires ne peuvent généralement pas être recyclées dans des procédés de production de matières à plus haute valeur ajoutée, telle que des solutions d'acide phosphorique ou d'acide polyphosphorique (= PPA) purifiés, ni dans les productions de sels de phosphates. Pour cette raison, ces matières volatilisables sont qualifiées dans la suite comme des « *matières volatilisables indésirables* ». A ce jour, ces solutions résiduaires à haut potentiels sont traitées comme de simples déchets à très basse valeur et haut pouvoir polluant.

L'acide polyphosphorique (= PPA) est un liquide visqueux qui peut être produit notamment à partir d'acide phosphorique. Le PPA a la formule générale HO[P(OH)(O)O]ₙH, avec n > 1. Lorsque n = 2 le PPA est communément appelé acide pyrophosphorique ; lorsque n = 3, on parle d'acide tripolyphosphorique. Pour n > 3, on parle simplement d'acide polyphosphorique, indépendamment de la valeur de n. Le PPA peut être produit par une déshydratation et polycondensation de l'acide orthophosphorique, H₃PO₄, selon l'équation (1). On obtient ainsi une solution aqueuse d'acide polyphosphorique dont la distribution des espèces moléculaires dépend entre autres de la température de polycondensation, Tpc.

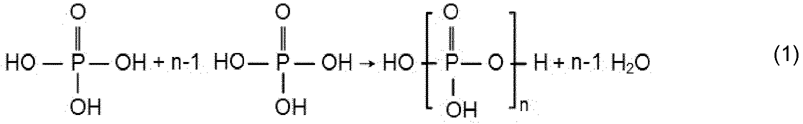

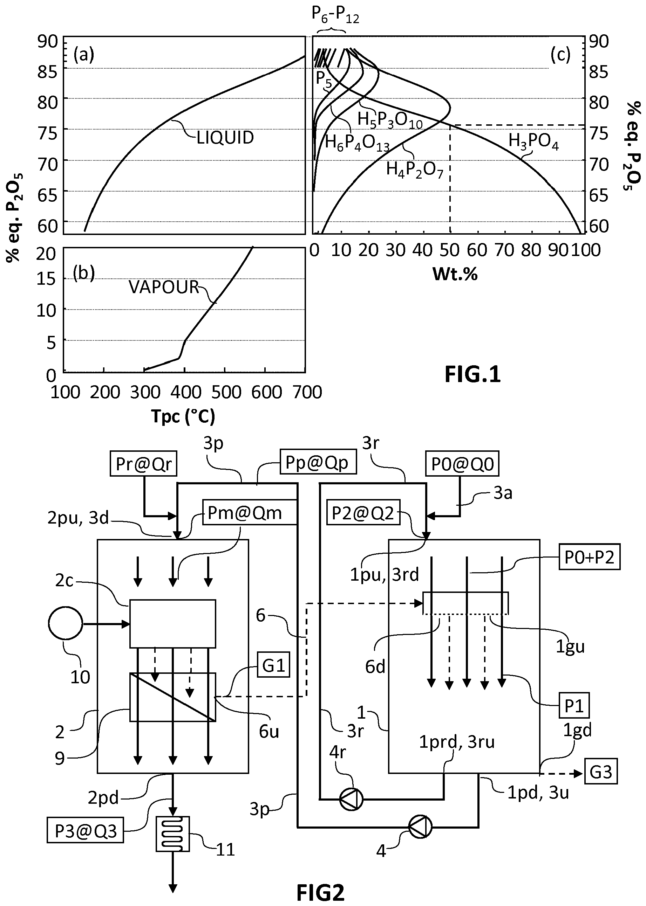

L'acide polyphosphorique se présente le plus souvent sous forme de chaines linéaires. Des formes cycliques de type métaphosphorique ou ramifiées peuvent cependant également exister. Comme illustré à la Figure 1, la température de polycondensation détermine la concentration en acide phosphorique équivalente en unités P₂O₅ à l'équilibre à l'état liquide (Figure 1(a)) et cette dernière détermine la distribution des espèces moléculaires (i.e., la distribution de l'acide phosphorique sous différentes formes de valeur n différente (Figure 1(c)). Ainsi, une solution aqueuse d'acide phosphorique à concentration équivalente en unités P₂O₅ inférieure à environ 61% sera constituée très majoritairement de molécules de H₃PO₄. Lorsque la concentration équivalente en unités P₂O₅ augmente, cela indique que la solution comprend de plus en plus de molécules polymérisées, la valeur de n augmentant avec la concentration en équivalents P₂O₅ tel qu'indiqué sur la Figure 1(c).

La déshydratation et polycondensation d'une solution d'acide phosphorique en acide polyphosphorique requiert une évaporation de molécules d'eau qui nécessite l'apport d'énergie calorifique. Le brevet EP2411325 B1 passe en revue un certain nombre de procédés connus de production d'acide polyphosphorique et décrit un procédé par voie humide nouveau par rapport aux procédés revus permettant de bénéficier d'une grande efficacité énergétique et de limiter de façon drastique l'impact environnemental. Ce brevet décrit un dispositif résistant aux conditions opératoires très sévères de production d'acide polyphosphorique, permettant de limiter les coûts d'entretien et d'instaurer une durabilité d'équipement et enfin d'assurer la production d'un acide polyphosphorique de qualité sans contamination lors du procédé de fabrication.

Il serait intéressant de produire un matériau à haute valeur ajoutée tel que de l'acide phosphorique purifié ou de l'acide polyphosphorique à partir de solutions résiduaires de basse valeur. Cependant, l'utilisation de telles solutions résiduaires dans un procédé de production d'acide phosphorique purifié ou de PPA tel que décrit dans EP2411325 B1 est impossible à cause de la présence de composés volatilisables indésirables dans de telles solutions.

JP2000178014 décrit un procédé de récupération d'acide phosphorique de solutions de récupération, dans lequel une solution de récupération comprenant des molécules de phosphore est incinéré à une température de 900 à 1000°C. Les gaz de combustion contenant des molécules de phosphore sont refroidis dans un refroidisseur et les molécules de phosphore sont récupérées sous forme d'acide phosphorique.

La présente invention propose un procédé plus efficace que celui décrit dans JP2000178014 pour la production d'acide phosphorique purifié ou de PPA à partir de solutions résiduaires comprenant du phosphore issues de procédés généralement industriels et qui, jusqu'à ce jour sont simplement traitées comme des déchets. La présente invention et ses avantages sont décrits plus en détails dans les sections suivantes.

### RESUME DE L'INVENTION

La présente invention est décrite dans les revendications indépendantes ci-jointes. Des variantes préférées sont définies dans les revendications dépendantes. En particulier, la présente invention concerne un procédé de purification d'une solution résiduaire aqueuse comprenant des molécules de phosphore et des matières volatilisables indésirables comprenant les étapes suivantes :
(a) introduire dans un contacteur gaz-acide, un flux d'alimentation F0 d'une solution d'alimentation P0 qui est aqueuse et comprenant des molécules de phosphore de préférence sous forme d'espèces de type orthophosphate à une concentration massique, xp0, comprise entre 0 et 54% équivalent en unités de P₂O₅,
(b) introduire dans le contacteur gaz-acide un flux de recirculation F2 de solution d'acide phosphorique enrichi recirculé P2,
(c) introduire dans le contacteur gaz-acide des gaz de combustion G1,
(d) contacter les flux d'alimentation F0 et de recirculation F2 et les gaz de combustion G1 pour former dans le contacteur gaz-acide, d'une part,
   - une solution d'acide phosphorique enrichi P1 comprenant une concentration massique, xp1, de teneur P₂O₅ qui est supérieure à xp0 (xp1 > xp0) et, d'autre part,
   - des gaz de combustion contactés G3,
(e) séparer les gaz de combustion contactés G3 de la solution d'acide phosphorique enrichi P1, puis
   - évacuer les gaz de combustion contactés G3 du contacteur gaz-acide, et
   - sortir la solution d'acide phosphorique enrichi P1 du contacteur gaz-acide (1),
(f) former à partir de ladite solution d'acide phosphorique enrichi P1, d'une part,
   - un flux de recirculation F2 de solution d'acide phosphorique enrichi recirculé P2 pour l'introduire dans le contacteur gaz-acide (1) tel que défini à l'étape (b) et, d'autre part,
   - un flux de pulvérisation Fp de la solution d'acide phosphorique enrichi P1 pour l'introduire dans une chambre de combustion,
(g) pulvériser à travers une flamme brûlant dans la partie supérieure de la chambre de combustion un flux de mélange Fm d'une solution de mélange Pm comprenant du phosphore à une concentration massique, xpm, et des matières volatilisables indésirables, le flux de mélange étant formé par, d'une part,
   - la solution d'acide phosphorique enrichi P1 et optionnellement, d'autre part,
   - un flux résiduaire Fr d'une solution résiduaire Pr aqueuse comprenant une concentration massique, xpr, d'au moins 1% P₂O₅,
      pour :
      - évaporer de l'eau et ainsi concentrer la solution de mélange Pm,
      - oxyder éventuellement et dans tous les cas évaporer les impuretés volatilisables indésirables,
      - former des gaz de combustion G1, et
      - former une solution de combustion P3 ayant,
         - une concentration massique, xp3 en P₂O₅ supérieure à la concentration de la solution de mélange Pm, et
         - une teneur en impuretés volatilisables inférieure à celle de la solution de mélange Pm,
(h) séparer la solution de combustion P3 des gaz de combustion G1 et
   - récupérer la solution de combustion P3, et
   - transférer les gaz de combustion G1 dans le contacteur gaz-acide (1) tel que défini à l'étape (c),
dans lequel les matières volatilisables indésirables sont introduites dans le flux résiduaire Fr de la solution résiduaire Pr aqueuse et / ou dans le flux d'alimentation F0 de la solution d'alimentation P0.

La solution d'alimentation P0 peut comprendre une concentration xp0 en comprise entre 0.1 et 50%, de préférence de 1 à 35%, de préférence de 5 à 20% P₂O₅. Dans certains cas, la solution d'alimentation peut comprendre également des matières volatilisables indésirables, mais ceci n'est pas indispensable notamment dans le cas où une solution résiduaire Pr comprenant des matières volatilisables indésirables est ajoutée au niveau de la chambre de combustion, comme expliqué plus bas. Le débit, Q0, de la solution d'alimentation P0 dans le contacteur exprimé par unité de puissance nominale [MW⁻¹] de la chambre de combustion est de préférence compris entre 100 et 3000 kg / (h MW), de préférence entre 500 et 2500 kg / (h MW).

La solution d'acide phosphorique enrichi P1 est identique à la solution d'acide phosphorique enrichi recirculé P2 et comprend une concentration xp1 en phosphore de préférence supérieure ou égale à 1%, de préférence inférieure à 60%, encore de préférence comprise entre 5 et 50%, préférentiellement entre 10 et 40% P₂O₅. Le débit total, Q1 = (Qp + Q2), de la solution P1 hors du contacteur exprimé par unité de puissance nominale [MW⁻¹] de la chambre de combustion est de préférence compris entre 600 et 123000 kg / (h MW), de préférence entre 1000 et 50000 kg / (h MW). Le rapport, Qp / (Qp + Q2), entre le débit massique Qp du flux de pulvérisation Fp et le débit massique total (Qp + Q2) est de préférence inférieur à 50%, de préférence inférieur à 10%, de préférence inférieur à 5%, encore de préférence inférieur à 2.5% et dans lequel le rapport Qp / (Qp + Q2) est supérieur à 0.1%, de préférence supérieur à 0.5%.

La solution résiduaire Pr peut comprendre une concentration xpr en phosphore supérieure ou égale à 2%, de préférence au moins 5%, encore de préférence au moins 10%, de préférence au moins 20% P₂O₅. La solution résiduaire Pr comprend une concentration xpv de matières volatilisables indésirables d'au moins 5 ppm, de préférence d'au moins 10 ppm, de préférence d'au moins 100 ppm, de préférence d'au moins 1%, de préférence d'au moins 5%, de préférence d'au moins 10%, encore de préférence d'au moins 25% en poids par rapport au poids total de la solution. Le débit Qr de la solution résiduaire Pr dans la chambre de combustion exprimé par unité de puissance nominale [MW⁻¹] de la chambre de combustion est de préférence non-nul et de préférence compris entre 5 et 1500 kg / (h MW), de préférence entre 400 et 1000 kg / (h MW). Si le débit Qr de la solution résiduaire Pr dans la chambre de combustion est nul, alors la solution d'alimentation P0 doit comprendre une concentration xpv non-nulle de matières volatilisables indésirables, par exemple d'au moins 5 ppm, de préférence d'au moins 10 ppm, de préférence d'au moins 100 ppm, de préférence d'au moins 1%, de préférence d'au moins 5%, de préférence d'au moins 10%, encore de préférence d'au moins 25% en poids par rapport au poids total de la solution.

Le rapport Qr / (Qr + Q0) peut être compris entre 0 et 99%, de préférence entre 5 et 90%, encore de préférence entre 10 et 80%, ou encore entre 15 et 45%. Le flux de mélange Fm peut comprendre une concentration en phosphore xpm, de préférence supérieure à 1% P₂O₅ (xpm > 1% P₂O₅,) et comprend des matières volatilisables indésirables, provenant de la solution résiduaire Pr et/ou de la solution d'alimentation P0. Dans le présent document, les débits Q0, Qp et Qr sont des débits massiques des solutions d'alimentation P0, d'acide phosphorique enrichi P1 et de résidus Pr, respectivement.

La solution de mélange Pm peut comprendre une concentration xpm supérieure à 2%, de préférence supérieure à 5%, encore de préférence supérieure à 20%, encore de préférence supérieure à 30%, de préférence supérieure à 40%, et encore de préférence comprise entre 45 et 60% P₂O₅. La solution de mélange Pm peut comprendre une concentration xpv de matières volatilisables indésirables de préférence d'au moins 5 ppm, de préférence d'au moins 10 ppm, de préférence d'au moins 100 ppm, de préférence d'au moins 1%, de préférence d'au moins 5%, de préférence d'au moins 10%, encore de préférence d'au moins 25% en poids par rapport au poids total de la solution. Le débit Qm de la solution de mélange Pm dans la chambre de combustion exprimé par unité de puissance nominale [MW⁻¹] de la chambre de combustion est de préférence compris entre 305 et 3000 kg / (h MW), de préférence entre 200 et 2000 kg / (h MW).

La solution de combustion P3 peut comprendre une concentration xp3 en phosphore supérieure à 1% équivalent en unités de P₂O₅, de préférence supérieure à 10%, de préférence supérieure à 25%, particulièrement de préférence supérieure à 40%, ou est de préférence comprise entre 30 et 76%. Le débit Q3 de la solution P3 de combustion hors de la chambre de combustion exprimé par unité de puissance nominale [MW-1] de la chambre de combustion est de préférence compris entre 240 et 1500 kg / (h MW), de préférence entre 600 et 3000 kg / (h MW).

Les flux d'alimentation F0 et de recirculation F2 peuvent être soit mélangés avant leur introduction dans le contacteur gaz-acide pour former un flux d'un mélange de la solution d'alimentation P0 et de la solution d'acide phosphorique enrichi recirculé P2, soit contactés après avoir été introduits séparément dans le contacteur gaz-acide pour former un flux d'un mélange de la solution d'alimentation F0 et de la solution d'acide phosphorique enrichi recirculé P2.

Il est préférable que le débit résiduaire Qr de la solution résiduaire Pr soit non-nul. Les flux résiduaire Fr et de pulvérisation Fp peuvent alors être soit mélangés pour former le flux de mélange Fm avant d'être pulvérisés dans la flamme dans la chambre de combustion, soit pulvérisés séparément dans la chambre de combustion pour former le flux de mélange Fm dans la flamme ou juste avant d'atteindre la flamme. La solution résiduaire Pr et, optionnellement, la solution d'alimentation P0 et donc la solution de pulvérisation Pp, comprennent des matières volatilisables indésirables. Il est possible également que seule la solution de pulvérisation Pp comprenne des matières volatilisables indésirables, par exemple dans le cas d'un débit Qr = 0, Il est cependant préféré que le débit résiduaire Qr soit non-nul.

Le contact entre les flux d'alimentation F0 et de recirculation F2 et les gaz de combustion G1 à l'étape (d) peut s'effectuer à co-courant ou à contre-courant, de préférence à co-courant en s'écoulant depuis une partie supérieure vers un partie inférieure du contacteur gaz-acide. Au cours de l'étape (d) de contact, le rapport (Qg1 / (Q0+Q2)) entre un débit massique Qg1 du gaz de combustion G1 introduit dans le contacteur gaz-acide et un débit massique total (Q0 + Q2) des flux d'alimentation de contact F0 et de recirculation F2 introduits dans le contacteur gaz-acide, est de préférence compris entre 0.1 et 50%, de préférence entre 0.5 et 10%, encore de préférence entre 1 et 7%.

La présente invention concerne également un dispositif de production d'acide phosphorique purifié (P3) suivant un procédé selon l'une quelconque des revendications précédentes, comprenant :
(A) une chambre de combustion présentant :
   - une entrée de pulvérisation dans la chambre de combustion permettant l'introduction à un débit d'une solution d'acide phosphorique enrichi P1 sous forme pulvérisée dans une unité de combustion,
   - une entrée de résidus dans la chambre de combustion ou en amont de l'entrée de pulvérisation permettant l'introduction d'une solution résiduaire Pr ou d'un mélange de solutions résiduaires Pr et d'acide phosphorique enrichi P1 sous forme pulvérisée dans une unité de combustion,
   - l'unité de combustion étant agencée dans la partie supérieure de la chambre de combustion, et étant capable de former une flamme ayant une température d'au moins 1500°C par combustion d'un combustible, ladite unité de combustion comprenant :
      o un brûleur,
      odes connexions fluidiques entre le brûleur et, d'une part, une source d'oxygène et, d'autre part, une source de combustible permettant d'alimenter la flamme,
   - une sortie de combustion de la chambre de combustion pour récupérer une solution de combustion P3 en phase liquide, et agencée en aval de l'unité de combustion qui est elle-même agencée en aval de l'entrée de pulvérisation et de résidus,
   - une sortie d'évacuation de gaz de combustion G1 issu de la flamme
(B) un contacteur gaz-acide présentant
   - une entrée d'alimentation reliée à une source d'une solution d'alimentation P0, permettant l'introduction à un débit d'alimentation de contact Q0 d'une solution d'alimentation P0,
   - une entrée de gaz de combustion permettant l'introduction dans le contacteur gaz-acide des gaz de combustion G1 à un débit Qg1,
   - une entrée de recirculation identique ou différente de l'entrée d'alimentation de contact, permettant l'introduction d'une solution d'acide phosphorique enrichi recirculé P2 à un débit de recirculation Q2,
   - les entrées d'alimentation et/ou de recirculation et l'entrée de gaz étant agencées pour permettre, d'une part,
      ∘un contact entre le flux d'alimentation F0 et flux de recirculation F2 pour former un flux d'un mélange de la solution d'alimentation P0 et de la solution d'acide phosphorique enrichi recirculé P2 et, d'autre part
      ∘ un contact du mélange ainsi formé avec les gaz de combustion G1,
   - une ou plusieurs sorties d'acide phosphorique enrichi,
(C) une connexion fluidique de gaz de combustion reliant une extrémité couplée à la sortie d'évacuation des gaz de combustion de la chambre de combustion, à une extrémité couplée à l'entrée de gaz de combustion dans le contacteur gaz-acide,
(D) une première connexion fluidique de pulvérisation reliant une extrémité amont (3u) couplée
   - à la sortie d'acide phosphorique enrichi du contacteur gaz acide ou
   - à un point d'embranchement avec une première connexion fluidique qui est couplée à la sortie d'acide phosphorique enrichi, à une extrémité avale couplée à l'entrée d'acide phosphorique enrichi dans la chambre de combustion,
   **Caractérisé en** ce **que** le dispositif comprend en outre
(E) une connexion fluidique de recirculation reliant une extrémité amont couplée,
   - à une sortie d'acide phosphorique enrichi recirculé (1pd) du contacteur gaz-acide ou
   - à un point d'embranchement avec la première connexion fluidique, à une extrémité avale couplée,
   - à l'entrée de recirculation du contacteur gaz-acide ou
   - à une connexion d'alimentation alimentant le contacteur gaz-acide en solution d'alimentation P0, et
(F) des moyens pour contrôler et maintenir un rapport, Qp / (Qp + Q2), entre un débit massique de pulvérisation Qp s'écoulant dans la connexion fluidique de pulvérisation (3p) et un débit massique total (Qp + Q2) défini comme la somme du débit massique de pulvérisation Qp et d'un débit massique de recirculation Q2 s'écoulant dans la connexion fluidique de recirculation à une valeur inférieure à 50%, de préférence inférieure à 10%, de préférence inférieure à 5%, encore de préférence inférieure à 2.5% et dans lequel le rapport Qp / (Qp + Q2) a une valeur supérieure à 0.1%, de préférence supérieure à 0.5%.

L'entrée de résidus est de préférence en communication fluidique avec une source d'une solution résiduaire Pr qui est aqueuse et comprend des molécules de phosphore sous forme orthophosphate et/ou polyphosphate et des matières volatilisables indésirables.

### BREVE DESCRIPTION DES FIGURES.

Différents aspects de la présente invention sont illustrés dans les Figures suivantes.
- **Figure 1** :: illustre graphiquement la relation entre la température d'ébullition et la concentration en P₂O₅ à l'équilibre de la phase liquide (partie (a)) et de la phase vapeur (partie (b)), ainsi que la relation entre la concentration en P₂O₅ et la distribution en poids des molécules d'acide phosphorique selon les différentes valeurs de n (partie (c)).
- **Figure 2 :**: illustre une variante de dispositif selon la présente invention.
- **Figure 3 :**: reporte des valeurs d'une sélection de paramètres illustrative du procédé selon la présente invention.
- **Figure 4 :**: illustre une variante de dispositif selon la présente invention.
- **Figure 5 :**: illustre une variante de dispositif selon la présente invention.

### DESCRIPTION DETAILLEE DE L'INVENTION

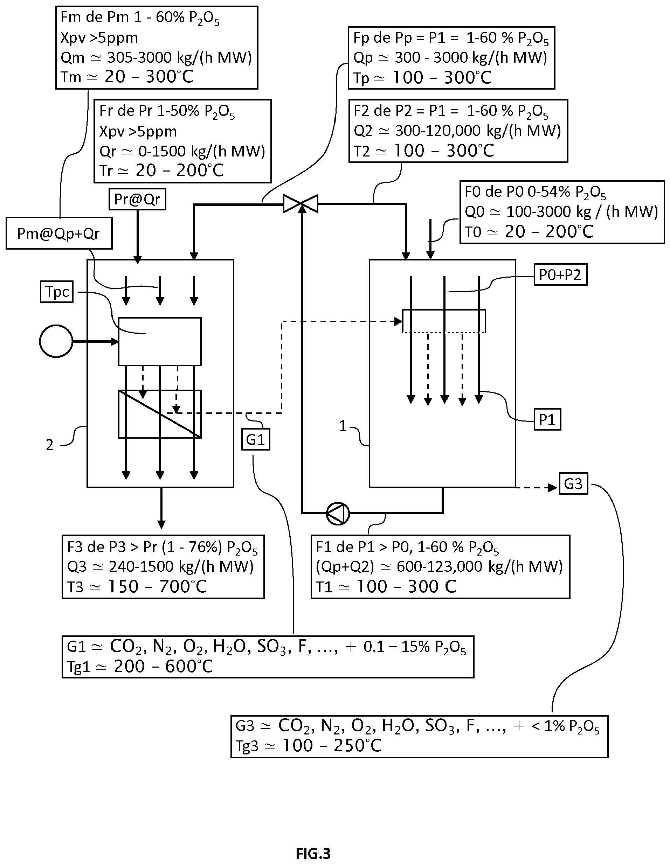

Les Figures 2 à 5 illustrent le procédé et des variantes non exhaustives de dispositifs permettant de mettre en oeuvre ledit procédé. Dans la suite, le terme « flux » représenté par la lettre « F » est utilisé dans son interprétation communément acceptée de simplement un écoulement d'un fluide. Seule la Figure 3 indique les flux par la lettre « F ». Les autres Figures illustrant des dispositifs indiquent des débits « Q » correspondant aux flux « F » de la Figure 3. Le terme « débit » représenté par la lettre « Q » caractérise la masse du flux par unité de temps et est exprimé en [kg / s] ou [kg / h]). Le terme « débit », même utilisé seul, définit donc un débit massique. Afin d'exprimer les débits en fonction de la puissance nominale de la chambre de combustion, les débits massiques des différents flux seront rapportés dans la suite en unités de [kg / (h MW)], qui représente un débit par unité de puissance nominale [MW⁻¹] de la chambre de combustion.

Comme la solution de combustion P3 issue de la combustion de la solution de mélange Pm obtenue à la fin du procédé de la présente invention peut comprendre de l'acide phosphorique purifié seul ou en mélange avec du des molécules polymérisées dont les concentrations respectives varient selon la température et la concentration en P₂O₅ de la solution de mélange Pm contactant la flamme de la chambre de combustion (cf. Figure 1), qui dépend elle-même *inter alia* de la concentration dans la solution résiduaire Pr utilisée, on se référera dans la suite du document à la solution P3 obtenue par l'expression « solution d'acide phosphorique purifié », même s'il est clair que cette solution peut comprendre également des molécules polymérisées et donc du PPA, elle peut également contenir des impuretés. Il est également évident que le taux de pureté de la solution P3 dépendra des applications auxquelles cet acide purifié est destiné et que la présence de certains ions ne sera pas toujours contreindiquée dans certaines applications.

### Conventions et Définitions

Sauf mention contraire dans ce brevet, le terme concentration est utilisé pour exprimer des concentrations massiques (pourcentages en poids, ^{w}/ₒ). Pour définir la teneur en l'espèce qui nous occupe principalement, lorsque l'on parle de concentration des solutions d'acide phosphorique ou autres, il faut entendre la teneur en poids exprimée en unités d'équivalents P₂O₅, que nous écrirons « % eq. P₂O₅ » ou encore « % P₂O₅ ». En ce qui concerne les flux gazeux, comme par exemple les gaz de combustion, où plusieurs espèces d'intérêt peuvent coexister en fonction des conditions opératoires, sous forme gazeuse ou liquide (par exemple par entraînement de gouttelettes), voire éventuellement solide (fumées), la concentration dans ces flux est également exprimée en unités d'équivalents P₂O₅ (en poids, ^{w}/ₒ). La dissociation ionique des espèces qui nous intéressent n'est pas considérée dans ce texte. Pour information, la concentration d'une solution d'acide phosphorique peut également être parfois exprimée en unités d'équivalents H₃PO₄. La correspondance entre les deux unités de concentration est définie par la relation : 1 eq. P₂O₅ = 0.7245 eq. H₃PO₄.

Il est entendu dans ce texte par les expressions
- « Solution d'acide phosphorique », une solution aqueuse comprenant du HO[P(OH)(O)O]ₙH, avec n ≥1
- « Acide orthophosphorique », une solution aqueuse comprenant très majoritairement du HO[P(OH)(O)O]ₙH, avec n = 1, c'est-à-dire une solution aqueuse d'acide phosphorique contenant moins de 61% en poids de P₂O₅ ;
- « Solution d'acide polyphosphorique » (= PPA), une solution aqueuse comprenant majoritairement du HO[P(OH)(O)O]ₙH, avec n > 1 ; c'est-à-dire une solution aqueuse d'acide phosphorique contenant plus de 76% en poids de P₂O₅;
- « polycondensation de l'acide phosphorique ou orthophosphorique », la polycondensation des molécules considérées telle que représentée par les équations (1) et/ou (2) ci-dessous.
- « Solution aqueuse comprenant du phosphore », une solution contenant du phosphore dissout sous forme d'espèces de type orthophosphate ou polyphosphates. Selon la teneur en P₂O₅ de ces solutions, les espèces ortho ou poly phosphates peuvent être présentes comme présenté en figure 1(c). Ces espèces peuvent être présentes sous formes d'ions.

### Procédé - contacts gaz-acide

Le procédé de la présente invention comprend l'introduction dans un contacteur gaz-acide (1) des flux suivants.
- Un flux d'alimentation F0 de solution d'alimentation P0 du contacteur à un débit d'alimentation, Q0. La solution d'alimentation P0 est une solution aqueuse comprenant de préférence du phosphore, préférentiellement sous forme d'espèces de type orthophosphate (cf Figure 1) à une concentration massique xp0 comprise entre 0 et 54%, de préférence de 0.1 à 50%, encore de préférence de 1 à 35%, de préférence de 5 à 20% P₂O₅. La solution d'alimentation F0 permet de renvoyer dans la chambre de combustion les espèces contenant du phosphore qui l'auraient quitté avec les gaz de combustion G1. Dans une variante de la présente invention, la solution P0 ne comprend pas de phosphore (xp0 = 0) et peut être de l'eau. La solution P0 peut contenir des composés qui peuvent réagir avec les matières volatilisables indésirables, pour les détruire, par exemple, de l'eau oxygénée, des ions chlorates ou nitrates. Ces composés peuvent par exemple réagir avec des matières carbonées dissoutes pour former du dioxyde de carbone (CO₂) qui est facilement volatilisable.

Dans une variante alternative de la présente invention, la solution P0 est une source de phosphore et comprend du P₂O₅. Par exemple, la solution d'alimentation de contact P0 peut comprendre une concentration xp0 en phosphore de 5 à 54%, de préférence inférieure à 45%, encore de préférence comprise entre 10 et 35% P₂O₅. Des concentrations plus élevées de la solution d'alimentation ne gênent en rien le procédé, et permet d'augmenter la concentration xpm en phosphore de la solution de mélange, Pm, atteignant la flamme dans la chambre de combustion. La teneur en P₂O₅ dans la solution d'acide phosphorique purifié, P3, en fin de procédé peut ainsi être variée.

Le débit Q0 de la solution P0 dans le contacteur exprimé par unité de puissance nominale [MW⁻¹] de la chambre de combustion est de préférence compris entre 100 et 3000 kg / (h MW), de préférence entre 500 et 2500 kg / (h MW), ou encore entre 1000 et 2000 kg / (h MW).

Dans une variante de la présente invention, la solution P0 comprend des matières volatilisables indésirables telles que typiquement du carbone, fluor, chlore, soufre, azote sous forme solubles (ionique ou non). Par exemple, elles peuvent être présentes dans la solution P0 dans des concentrations xpv de matières volatilisables indésirables d'au moins 5 ppm (part par million), ou d'au moins 10 ppm, de préférence d'au moins 100 ppm. De préférence, la concentration xpv de matières volatilisables indésirables est inférieure à 5%, de préférence inférieure à 2% en poids de carbone organique total par rapport au poids total de la solution. Par exemple, la solution P0 peut comprendre au moins 10 ppm de fluor, ou au moins 100 ppm de fluor, au moins 1% de fluor. Selon les applications, de telles solutions sont inutilisables telles quelles.

Si la solution P0 ne comprend pas de matières volatilisables indésirables, alors une solution de recirculation Pr contenant de telles matières volatilisables indésirables est ajoutée au niveau de la chambre de combustion afin de produire une solution de mélange comprenant des matières volatilisables indésirables dans les concentrations indiquées ci-dessus.

Pour éviter le dépôt excessif de souillures dans le contacteur gaz-acide, il est préférable que la majeure partie ou la totalité des matières volatilisables indésirables soit introduite directement dans la chambre de combustion, contenues dans la solution résiduaire Pr.
- Un flux de recirculation F2 de solution d'acide phosphorique enrichi recirculé P2 qui sera défini en détails plus loin. Le débit de la solution d'acide phosphorique enrichi recirculé P2 dans le contacteur exprimé par unité de puissance nominale [MW⁻¹] de la chambre de combustion peut être compris entre 300 et 120000 kg / (h MW), de préférence entre 600 et 100000 kg / (h MW), de préférence supérieur à 9000 kg / (h MW), de préférence entre 1500 et 80000 kg / (h MW). Le flux de recirculation F2 de solution d'acide phosphorique enrichi recirculé P2 est le fruit de la mise en contact d'un mélange des flux d'alimentation F0 et de recirculation F2 de solution d'acide phosphorique enrichi recirculé P2 d'un cycle antérieur avec un flux de gaz de combustion G1.
- Un flux de gaz de combustion G1 qui sont formés lors de la combustion d'un flux de mélange Fm d'une solution de mélange Pm comprenant du phosphore à une concentration massique xpm supérieure à celle du flux d'alimentation de contact F0 dans une chambre de combustion qui seront décrits et discutés en détails plus loin. Le flux de gaz de combustion G1 comprend des molécules de phosphore sous forme de gouttelettes ou de vapeurs, emportées depuis la chambre de combustion vers le contacteur gaz-acide. Par exemple, le flux de gaz de combustion G1 peut comprendre entre 0.1 et 15% P₂O₅, par exemple entre 0,5 et 13%, ou encore entre 1 et 10% P₂O₅, de préférence entre 2 et 5% P₂O₅. De plus, les gaz de combustion comprennent des matières volatilisées indésirables qui sont issues de la combustion de la solution de mélange Pm.

Les flux d'alimentation F0 et de recirculation F2 et les gaz de combustion G1 sont donc mis en contact les uns avec les autres dans le contacteur gaz-acide (on parle donc d'un contacteur gaz-acide direct) pour former, d'une part, une solution d'acide phosphorique enrichi P1 et, d'autre part, des gaz de combustion contactés G3.

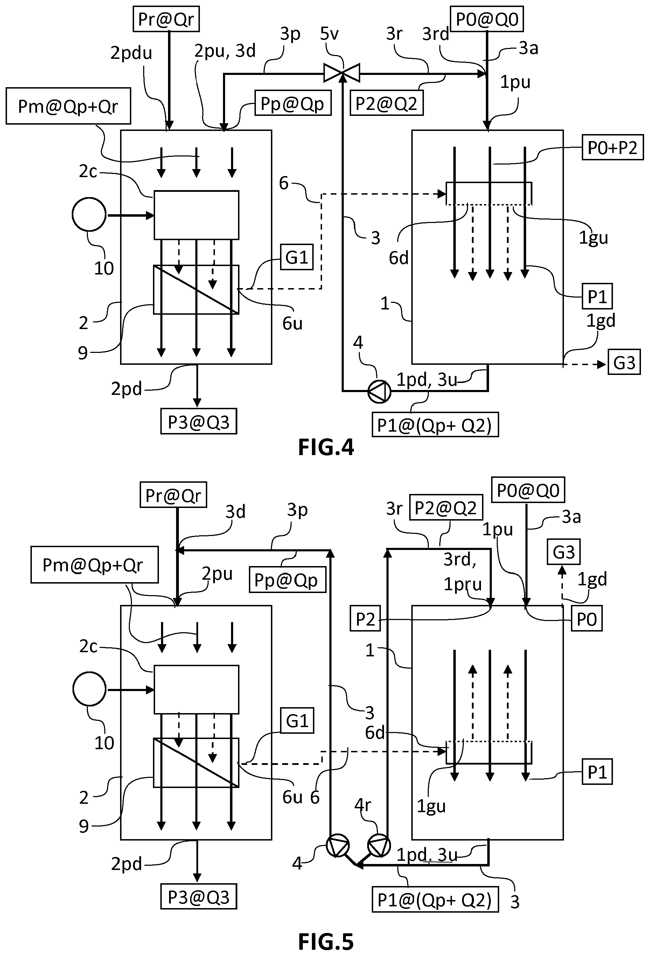

Dans une variante préférée, illustrée dans les Figures 2&4, les flux d'alimentation F0 et de recirculation F2 sont mélangés avant leur introduction dans le contacteur gaz-acide pour former un flux d'un mélange de la solution d'alimentation P0, du contacteur et de la solution d'acide phosphorique enrichi recirculé P2. Pour cela il suffit d'embrancher un conduit de recirculation (3r) acheminant le flux F2 et un conduit d'alimentation (3a) acheminant le flux F0 en amont d'une entrée (1pu) du contacteur gaz-acide (1). Les pressions dans les conduits de recirculation (3r) et d'alimentation (3a) doivent être contrôlées afin d'éviter un reflux de liquide dans une des deux conduites embranchées. La Figure 2 montre une conduite d'alimentation (3a) embranchée dans la conduite de recirculation (3r), alors que la Figure 4 illustre une conduite de recirculation (3r) embranchée dans une conduite d'alimentation (3a). Dans les deux configurations, les gaz de combustion G1 sont alors mis en contact avec le mélange de flux de solutions (F0+F2) ainsi formé, après l'introduction de ce dernier dans le contacteur gaz-acide (1).

Dans une variante alternative, illustrée aux Figures 3&5, les flux d'alimentation F0 et de recirculation F2 sont contactés après avoir été introduits séparément dans le contacteur gaz-acide pour former un flux d'un mélange de la solution d'alimentation P0 du contacteur et de la solution d'acide phosphorique enrichi recirculé P2. Les flux d'acide phosphorique F0 et F2 et de gaz de combustion G1 sont ainsi tous mis en contact dans le contacteur gaz-acide. Il suffit de prévoir dans le contacteur gaz-acide une entrée (1 pu) de flux d'alimentation F0 séparée d'une entrée (1 pru) de flux de recirculation F2.

Le contact entre les flux d'alimentation F0 et de recirculation F2 ou leur mélange (F0+F2) et les gaz de combustion G1 dans le contacteur gaz-acide peut s'effectuer par contact de flux à co-courant ou à contre-courant. En particulier, les phases liquides s'écoulent vers le bas dans le sens de la gravité, et la phase gazeuse remonte vers le haut. Dans une variante préférée, les deux ou trois flux s'écoulent à co-courant depuis une partie supérieure vers une partie inférieure du contacteur gaz-acide. Dans le contexte de la présente invention, les termes « supérieur » et « inférieur » se comprennent suivant la direction des forces de la gravité terrestre qui s'étendent en direction du centre de gravité de la terre. Ainsi, en l'absence de gradients de pression, un liquide s'écoule naturellement de la partie supérieure d'un réacteur vers sa partie inférieure qui se trouve en aval de la partie supérieure suivant la direction de la gravité terrestre.

Il est possible de contacter les gaz de combustion G1 avec les flux d'alimentation et de recirculation d'acide phosphorique F0&F2 ou leur mélange (F0+F2) en guidant les gaz de combustion dans un flux transversal à ceux des acides phosphoriques. La mise en contact selon des flux co-courants est cependant préférée.

Le contact entre les flux d'alimentation F0 et de recirculation F2 ou leur mélange (F0+F2) et les gaz de combustion G1 forme une solution d'acide phosphorique enrichi P1 et des gaz de combustion contactés G3. Ce contact peut s'effectuer en faisant percoler les flux à travers un matériau de remplissage qui résiste aux conditions opératoires. Lors du contact entre gaz de combustion G1 et les flux d'alimentation F0 et de recirculation F2 des échanges se produisent. D'une part, les molécules de phosphore transportées par les gaz de combustion sous forme de gouttelettes et de vapeur sont emportées par les flux F0 et F2, permettant la formation de la solution d'acide phosphorique enrichi P1 ayant une teneur en P₂O₅ supérieure à celles de chacun des flux F0 et F2. D'autre part, un échange de chaleur s'effectue entre les gaz de combustion chaud, à une température Tg1 entre 200 à 600°C, vers les solutions aqueuses des flux F0 et F2 qui sont à des températures inférieures, telles qu'indiquées à la Figure 3. Les gaz contactés G3 sont donc à une température Tg3 < Tg1 facilitant leurs traitements postérieurs en vue de leur évacuation dans l'atmosphère. En même temps, la solution d'acide phosphorique enrichi P1 est ainsi à une température T1 supérieure à celle du mélange des solutions P0 et P2 ; T1 est supérieure à la température T0 de la solution d'alimentation P0 (qui peut être de l'ordre de 20 à 200°C) et est sensiblement égale à la température T2 de la solution d'acide phosphorique enrichi recirculé P2 puisqu'il s'agit de la même solution à deux extrémités de la boucle de recirculation (3r).

La solution d'acide phosphorique enrichi P1 et les gaz de combustion contactés G3 formés suite à la mise en contact des flux d'alimentation et de recirculation d'acide phosphorique F0&F2 avec les gaz de combustion G1 sont alors séparés par des moyens de séparation bien connus de l'homme du métier, tels qu'un séparateur centrifuge ou par gravité, un coalesceur, un dévésiculeur, un matelas, des chicanes, etc. Les gaz de combustion contactés G3 sont alors évacués du contacteur gaz-acide (1) à une température sensiblement inférieure à celle des gaz de combustion contactés G3 introduits dans ledit contacteur gaz-acide pour des traitements ultérieurs. Comme la majeure partie des molécules de phosphore contenues dans le flux de gaz de combustion G1 sont transférées dans le flux F1 de solution d'acide phosphorique enrichi P1 lors du contact du flux G1 avec les flux F0 et F2, le flux de gaz contactés G3 est beaucoup plus pauvre en P₂O₅ que le flux de gaz de combustion G1 avec des teneurs qui peuvent être inférieures à 1% P₂O₅.

Les gaz de combustion contactés G3 contenant les matières volatilisées indésirables peuvent également subir un lavage après leur sortie du contacteur gaz-acide, avec une solution aqueuse de lavage afin de dissoudre et éliminer, avant de relâcher les gaz dans l'atmosphère, les composés indésirables tels que par exemple des composés fluorés ou chlorés, SOs, etc.. D'autres traitements des gaz de combustion contactés G3 sont possibles, incluant par exemple la condensation des gaz dans un condenseur indirect. La solution d'acide phosphorique enrichi P1 est également sortie du contacteur gaz-acide, séparément des gaz de combustion contactés G3.

### Procédé -flux F1 et division en flux Fp et F2

La solution d'acide phosphorique enrichi P1 peut comprendre une concentration xp1 en unités P₂O₅ supérieure ou égale à 1%, de préférence inférieure à 60%, encore de préférence comprise entre 5 et 50%, préférentiellement entre 10 et 40% P₂O₅. La concentration en P₂O₅ de la solution d'acide phosphorique enrichi P1 dépend bien entendu de la concentration en P₂O₅ de la solution d'alimentation, P0, et du flux de gaz de combustion, G1. Comme discuté plus bas, la concentration en phosphore de la solution d'acide phosphorique enrichi P1 est en général supérieure à celle de la solution d'alimentation, P0.

Avant, pendant ou après son évacuation du contacteur gaz-acide, la solution d'acide phosphorique enrichi P1 est divisée en deux flux distincts :
- un flux de recirculation F2 de solution d'acide phosphorique enrichi recirculé P2 pour l'introduire dans le contacteur gaz-acide (1) à travers une boucle de recirculation (3r) pour le mettre en contact avec le flux d'alimentation F0 et les gaz de combustion G1 tel que décrit supra, et
- un flux de pulvérisation Fp d'une solution de pulvérisation Pp pour l'introduire dans une chambre de combustion (2).

La solution de pulvérisation Pp et la solution d'acide phosphorique enrichi recirculé P2 sont identiques en composition entre elles et identiques à la solution d'acide phosphorique enrichi P1 (P1 = Pp = P2) puisqu'elles n'ont subi aucune altération entre le moment de leur formation dans le contacteur gaz-acide et la division en deux flux distincts de recirculation F2 et de pulvérisation Fp. Les températures Tp et T2 des solutions Pp et P2 sont également sensiblement identiques à la température T1 de la solution P1 qui peut être de l'ordre de 100 à 300°C. Les solutions Pp et P2 comprennent de préférence, en régime stationnaire, une concentration en P₂O₅ plus élevée que celle de la solution d'alimentation P0 du contacteur. Par exemple, les solutions Pp et P2 peuvent comprendre des concentrations en phosphore comprises entre 1 et 60%, préférentiellement entre 5 et 50% P₂O₅, préférentiellement entre 10 et 40% P₂O₅. Ceci s'explique par deux raisons principales.

Premièrement, la mise en contact des flux d'alimentation et de recirculation d'acide phosphorique avec les gaz de combustion G1 qui sont à une température Tg1 plus élevée de l'ordre de 300 à 600°C (cf. Figure 3), entraîne l'évaporation d'une partie de l'eau contenue dans de la phase aqueuse des solutions P0 et P2, ce qui augmente de facto la concentration en P₂O₅ des solutions P1, Pp et P2.

Deuxièmement, comme nous le discuterons plus loin, les gaz de combustion G1 formés lors de la combustion du flux de mélange Fm de solution de mélange Pm dans la chambre de combustion comprennent des gouttelettes ou des vapeurs d'acide phosphorique. Les gaz de combustion G1 peuvent comprendre entre 0.1 et 15% P₂O₅, de préférence entre 0,5 et 13%, de préférence entre 1 et 10%, de préférence entre 2 et 5%, (cf. Figure 3). Lors du contact avec les flux d'alimentation de solution P0 et d'acide phosphorique enrichi recirculé P2, la majeure partie de ces molécules sont transférées des gaz de combustion vers le mélange de solution d'acides (P0+P2). Après contact, les gaz de combustion contactés G3 contiennent beaucoup moins de molécules de P₂O₅ que le gaz G1 avant le contact, en général moins de 1% ; de préférence moins de 0.5%, de manière avantageuse moins de 0.1% en poids (cf. Figure 3). Par ce transfert de molécules de P₂O₅ vers le mélange d'acides, la concentration en P₂O₅ de celui-ci augmente.

Dans une variante de l'invention, la solution d'acide phosphorique enrichi P1 est divisée en deux flux de pulvérisation Fp et de recirculation F2 à la sortie du contacteur gaz-acide dans une connexion fluidique de pulvérisation (3p) et dans une connexion fluidique de recirculation (3r), respectivement, tel qu'illustré à la Figure 2. Chacune des connexions fluidiques (3p) et (3r) est équipée d'un système de pompage (4, 4r) pour assurer les débits et un flux de pulvérisation Fp à un débit de pulvérisation Qp vers une chambre de combustion (2) et pour entraîner le flux de recirculation F2 à un débit Q2 vers le contacteur gaz-acide formant ainsi une boucle de recirculation.

Dans une variante alternative, la solution d'acide phosphorique enrichi P1 est sortie du contacteur gaz-acide dans une première connexion fluidique (3, 3u) qui est commune et se divise en deux en un point d'embranchement (5) en « T » ou en « Y » avec, d'une part, la connexion fluidique de pulvérisation (3p) qui entraîne le flux de pulvérisation Fp à un débit Qp, vers une chambre de combustion (2) et, d'autre part une connexion fluidique de recirculation (3r) qui entraîne le flux de recirculation F2 à un débit Q2 vers le contacteur gaz-acide, formant ainsi une boucle de recirculation. Différentes variantes de cette configuration comprenant un point d'embranchement (5) sont illustrées aux Figures 3 à 5. Les débits de pulvérisation Qp et de recirculation Q2 peuvent être assurés par une ou plusieurs valves (cf. Figure 3 et 4), par des pompes (4, 4r) sur chacune des branches du point d'embranchement (5) (cf. Figure 5) et/ou par des sections de conduits de pulvérisation (3p) et de recirculation (3r) dimensionnées pour obtenir les débits désirés ou d'autres moyens bien connus et utilisés industriellement pour répartir un flux entre 2 alimentations (par exemple, des conduites en T, en Y avec jeux de vannes régulées).

La solution d'acide phosphorique enrichi P1 sort du contacteur à un débit total, Q1 = (Qp + Q2). Le débit total Q1 exprimé par unité de puissance nominale [MW⁻¹] de la chambre de combustion est de préférence compris entre 600 et 123000 kg / (h MW) ou entre 1000 et 120000 kg / (h MW), de préférence entre 12000 et 100000 kg / (h MW). Comme discuté plus haut, le flux F1 d'acide phosphorique enrichi (P1) est divisé en deux flux Fp et F2 ayant chacun un débit de pulvérisation Qp et un débit de recirculation Q2. La division en deux flux peut se faire avant la sortie du contacteur gaz-acide, à la sortie de celui-ci, ou après la sortie. Les débits de pulvérisation Qp et de recirculation Q2 doivent être déterminés en fonction *inter alia* de la capacité de la chambre de combustion et du contacteur gaz-acide, de la température des gaz de combustion G1 et leur teneur en P₂O₅.

Dans un état stationnaire de production, le rapport, Qp / (Qp + Q2), entre le débit massique Qp du flux de pulvérisation Fp et le débit massique total (Qp + Q2) du flux d'acide phosphorique enrichi F1 (qui est en fait la somme des débits de pulvérisation Qp et de recirculation Q2) est de préférence inférieur à 50%, de préférence inférieur à 20% et encore de préférence inférieur à 10%. Dans une variante préférée de l'invention le rapport Qp / (Qp + Q2), est inférieur à 5%, de préférence inférieur à 4%, encore de préférence inférieur à 2.5% et même inférieur à 2%. Le rapport Qp / (Qp + Q2), est de préférence supérieur à 0.1%, ou encore supérieur à 0.2% et de préférence supérieur à 0.5%. Augmenter le débit Q2 par rapport au débit Qp permet, d'une part, de refroidir les gaz de combustions G1 à une température plus basse, ce qui est nécessaire avant leur évacuation et, d'autre part, d'enrichir davantage la teneur en P₂O₅ de la solution d'acide phosphorique enrichi Pp.

Le rapport, Q2 / (Qp + Q2), entre le débit massique Q2 du flux de recirculation F2 et le débit massique total (Qp + Q2), est bien entendu le complémentaire du rapport Qp / (Qp + Q2), dont la somme fait 100%. Le débit de recirculation Q2 est donc de préférence supérieur ou égal au débit de pulvérisation Qp et, dans certaines variantes préférées, est considérablement supérieur à Qp avec un rapport de débits, Qp / Q2, pouvant aller de 0.1 / 99.9 à 49/ 51 (= 0.1 à 96%). De préférence, le rapport de débits Qp / Q2, est compris entre 1 / 99 et 5 / 95 (= 1 à 5.3%). De préférence, le rapport de débits Qp / Q2 est compris entre 1 / 99 et 4 / 95 (=1 à 4.2%).

Comme discuté plus haut, le débit Q2 de la solution d'acide phosphorique enrichi recirculé P2 dans le contacteur exprimé par unité de puissance nominale [MW⁻¹] de la chambre de combustion peut être compris entre 300 et 120000 kg / (h MW), de préférence entre 600 et 110000 kg / (h MW), de préférence entre 9000 et 100000 kg / (h MW). Ainsi, le débit Qp de la solution de pulvérisation Pp s'écoulant vers la chambre de combustion exprimé par unité de puissance nominale [MW⁻¹] de la chambre de combustion peut être compris entre 300 et 3000 kg / (h MW), de préférence entre 600 et 2000 kg / (h MW), de préférence entre 1000 et 1500 kg / (h MW).

### Procédé - Flux Fp, Fr et Fm

Un flux de mélange Fm d'une solution de mélange Pm comprenant des matières volatilisables indésirables à une concentration massique xpv non-nulle et du phosphore à une concentration massique xpm de préférence supérieure à celle du flux d'alimentation de contact F0 est formé par le flux de pulvérisation Fp, optionnellement mélangé à un flux résiduaire Fr d'une solution résiduaire Pr aqueuse provenant des résidus d'un procédé industriel préalable. Si la solution d'alimentation F0 ne comprend pas de matières volatilisables indésirables, alors le mélange du flux d'alimentation P0 avec un flux résiduaire Fr est obligatoire. Sinon, il est optionnel, mais préféré. Le flux de mélange Fm est pulvérisé à travers une flamme brûlant dans la partie supérieure d'une chambre de combustion (2) pour :
- oxyder éventuellement les matières volatilisables indésirables et volatiliser celles-ci,
- former des gaz de combustion G1 emportant les matières volatilisables indésirables ainsi volatilisées (= matières volatilisées indésirables) et ainsi purifier la solution résiduaire Pr,
- évaporer de l'eau et ainsi concentrer la solution de mélange Pm,
- former une solution d'acide phosphorique purifié P3.
- polymériser éventuellement, selon la teneur initiale en P₂O₅, des molécules d'acide phosphorique purifié en acide polyphosphorique.

Le flux résiduaire Fr comprend :
- une concentration massique, xpr, d'au moins 1% P₂O₅,
- une concentration massique, xer, d'eau, et
- des matières volatilisables indésirables.

Le flux résiduaire Fr comprend une concentration xpr en phosphore d'au moins 1% ou d'au moins 5%, de préférence au moins 10%, encore de préférence au moins 15%, de préférence au moins 20% P₂O₅, Le débit Qr de la solution résiduaire Pr dans la chambre de combustion exprimé par unité de puissance nominale [MW⁻¹] de la chambre de combustion est de préférence non nul et de préférence compris entre 5 et 1500 kg / (h MW), de préférence entre 400 et 1000 kg / (h MW). La température de la solution résiduaire Fr peut être comprise entre 20 et 200°C, de préférence entre 40 et 150°C, encore de préférence entre 50 et 100°C. Un préchauffage de la solution Fr est avantageux en termes d'efficacité de la combustion de la solution de mélange Fm dans la flamme.

La solution résiduaire Pr et, optionnellement la solution d'alimentation P0, est ou contient de préférence une solution provenant de l'industrie. Cette solution peut être générées par des lavages d'installations ou lors d'opérations courantes de production ou de maintenance dans des industries telles que les industries métallurgique, agro-alimentaire, pharmaceutique, chimique et particulièrement lors de la production de sels phosphatés ou d'engrais. Ces solutions sont en général difficilement recyclables en l'état de par leurs teneurs en polluants divers notamment des résidus solubles de matières organiques et de par leurs faibles concentrations en phosphore. Elles doivent donc être traitées avant d'être ensuite concentrées. La solution résiduaire peut également être issues de procédés de récupération du phosphore au départ de matières premières appelées « secondaires » et qui sont en fait des composés solides contenant du phosphore autre que du minerai de phosphate. On peut citer notamment les poudres ou cendres de poudres d'os, les boues ou les cendres de boues de stations d'épurations, les lisiers de porcs et de poulets ou les cendres de lisiers, etc. Ces solutions résiduaires ou solutions d'acide résiduaire ou encore solutions résiduaires comprennent du P₂O₅ mais également souvent des matières volatilisables indésirables telles que typiquement du carbone, fluor, chlore, soufre, azote sous forme solubles (ionique ou non). Les concentrations des matières volatilisables indésirables dépendent bien entendu de l'origine de la solution résiduaire. Par exemple elles peuvent être présentes dans la solution résiduaire Fr dans des concentrations xpv de matières volatilisables indésirables d'au moins 5 ppm (part par million), de préférence d'au moins 10 ppm, de préférence d'au moins 100 ppm %, de préférence d'au moins 1%, encore de préférence d'au moins 5% en poids de carbone organique total par rapport au poids total de la solution ou encore au moins 10 ppm de fluor, au moins 100 ppm de fluor, au moins 1 % de fluor. Selon les applications, ces solutions sont inutilisables telles quelles.

Dans un état stationnaire de production, le rapport, Qp / Q0, entre le débit Qp du flux de pulvérisation Fp et le débit Q0 du flux d'alimentation F0 est de préférence compris entre 100 et 250%, de préférence entre 101 et 140%, de préférence entre 110 et 115%. Ce rapport peut être plus élevé que 100% car le contact des flux Q0 et Q2 avec les gaz de combustion dans le contacteur gaz-liquide augmente la masse du flux, F1, sortant du contacteur gaz-liquide. La valeur de ce rapport peut diminuer selon que la valeur du débit résiduaire, Qr, augmente.

Le rapport de débits Qr / (Qp + Qr) entre le débit résiduaire Qr et la somme des débits de pulvérisation Qp et de résidus Qr représente la fraction de débit de la solution résiduaire Pr entrant dans la chambre de combustion. La valeur de ce rapport dépend *inter alia* des teneurs en P₂O₅ et en matières volatilisables indésirables de la solution résiduaire et/ou de la solution d'alimentation, qui sont déterminantes pour la teneur en P₂O₅ et en matières volatilisables indésirables de la solution de mélange Pm. Par exemple, le rapport Qr / (Qp + Qr) peut -être compris entre 0 et 94%, de préférence entre 5 et 90%, encore de préférence entre 10 et 80%, ou encore entre 15 et 45%,

Indépendamment de la valeur du rapport Qr / (Qp + Qr), la solution de mélange Pm comprend de préférence une concentration xpm en phosphore supérieure à 1%, de préférence supérieure à 2% ou à 5%, encore de préférence supérieure à 20%, encore de préférence supérieure à 30%, de préférence supérieure à 40%, et encore de préférence comprise entre 45 et 60% P₂O₅. Le débit Qm de la solution Pm dans la chambre de combustion est la somme des débits de pulvérisation Qp et de la solution résiduaire Qr. Exprimé par unité de puissance nominale [MW⁻¹] de la chambre de combustion le débit de mélange Qm est de préférence compris entre 305 et 3000 kg / (h MW), de préférence entre 900 et 2000 kg / (h MW).

### Procédé -Evaporation des Matières Volatilisables Indésirables et Concentration en P₂O₅

Une fonction principale de la chambre de combustion est de dégrader si nécessaire par oxydation puis de vaporiser les matières volatilisables indésirables présentes dans la solution résiduaire. Une seconde fonction de la chambre de combustion est d'évaporer l'eau présente dans les solutions pour concentrer les solutions résiduaires et d'alimentation. Une troisième fonction (optionnelle) est la polycondensation des molécules de phosphates présentes en acide polyphosphorique (PPA). La répartition des espèces présente dans la solution ainsi formée dépend de la concentration en P₂O₅ de la solution de mélange Fm atteignant la flamme de combustion, ainsi que de la température de polycondensation. Comme on peut le voir sur la Figure 1(c), du PPA ne se forme que si la teneur en P₂O₅ est suffisamment élevée, environ 60% P₂O₅, ce qui est supérieur à la teneur en phosphore généralement présente dans des solutions résiduaires Fr. Si du PPA est désiré, il est alors nécessaire d'augmenter la teneur en phosphore de la solution de mélange Fm en alimentant la chambre de combustion avec une solution de pulvérisation Fp ayant une plus haute concentration en phosphore ou avec une solution résiduaire Fr ayant une plus haute concentration en phosphore.

La combustion dans la flamme de la solution de mélange Pm forme donc, d'une part, des gaz de combustion G1 formés par l'évaporation de l'eau et, en particulier, des matières volatilisables indésirables et, d'autre part, une solution de combustion P3 qui est à l'état liquide et comprenant du phosphore et, si la concentration en P₂O₅ et la température de polycondensation Tpc sont suffisantes, des espèces polymérisées par polycondensation de l'acide phosphorique contenu dans la solution Pm.

La température atteinte par la solution de mélange Pm dans la flamme est un paramètre important du procédé puisqu'elle va permettre la volatilisation des composés volatilisables indésirables présents dans la solution résiduaire et donc dans la solution de mélange. La concentration en P₂O₅ obtenue dans la solution de combustion P3 en est dépendante également comme le montre le graphe de la Figure 1(a). Il est aussi important de maintenir la solution de mélange contenant de l'acide phosphorique, en contact avec la flamme et les gaz de combustion durant un temps suffisant pour que l'eau puisse s'évaporer et qu'éventuellement la polycondensation puisse être réalisée.

La flamme est alimentée par un combustible et une source d'oxygène, typiquement de l'air ou, pour une température supérieure, de l'oxygène. La flamme est de préférence une flamme légèrement oxydante, comprenant de préférence entre 1 à 5% d'excès d'airLe combustible est de préférence du gaz naturel, du butane, propane, ou tout autre combustible qu'il soit gazeux ou liquide. En l'absence de pulvérisation de la solution de mélange Pm, la flamme atteint de préférence une température théorique d'au moins 750°C, de préférence au moins 1000°C, encore de préférence au moins 1700°C, par exemple 1800°C ± 50°C. Dans le procédé de la présente invention, l'accroissement de température est instantanément limité car, d'une part, la solution de mélange Pm est alimentée à une température Tm inférieure, de l'ordre de 20-300°C et, d'autre part, car l'évaporation des molécules d'eau de la solution est énergivore.

Les flux résiduaire Fr et de pulvérisation Fp peuvent être mélangés pour former le flux de mélange Fm avant d'être pulvérisés dans la flamme dans la chambre de combustion, tel qu'illustré dans les Figures 2&5. Alternativement, les deux flux Fr et Fp peuvent être pulvérisés séparément dans la chambre de combustion pour former le flux de mélange Fm dans la flamme ou juste avant d'atteindre la flamme, tel qu'illustré dans les Figures 3&4.

La solution de combustion P3 qui consiste en une solution d'acide phosphorique purifié est donc une solution aqueuse d'acide phosphorique qui peut contenir des espèces polymérisées selon la teneur en P₂O₅ présente dans la solution (cf. Figure 1).

Si la production de PPA est désirée, il est préférable que la solution de mélange pulvérisée dans la flamme atteigne une température de polycondensation Tpc d'au moins 400°C, de préférence au moins 500°C et même supérieure à 550°C, voire de l'ordre de 650°C ou 700°C, pendant un temps de polycondensation prédéfini. Une température de polycondensation Tpc élevée permet d'obtenir des solutions d'acide polyphosphorique à haute concentration en P₂O₅, de l'ordre de 86% et plus, avec des longueurs de chaînes n plus longues (e.g., n ≥ 5 à 12) (cf. Figure 1(c)). Les températures nécessaires à la polycondenstion de l'acide phosphorique exigent des matériaux résistants chimiquement et thermiquement pour les différents éléments du dispositif de réaction. La solution de mélange Pm, qui comprend des molécules d'acide orthophosphorique et optionnellement des oligomères d'acide polyphosphorique (de m+1 unités condensées) subit une réaction de polycondensation sous l'action de la température pour libérer de l'eau et former des chaînes polymériques plus longues, selon l'équation (1) décrite supra et selon l'équation (2) (avec m ≥ 1 et r ≥ 1) :

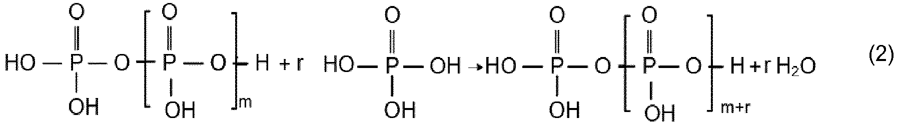

La solution de combustion P3 ainsi formée est alors séparée des gaz de combustion G1 formés lors de l'évaporation de l'eau et des matières volatilisables indésirables et éventuellement de la polycondensation de l'acide polyphosphorique dans un séparateur gaz-liquide (9). La solution de combustion P3 contenant de l'acide phosphorique et optionnellement de l'acide polyphosphorique et pratiquement exempte de matières volatilisables indésirables est récupérée alors que les gaz de combustion G1 sont transférés dans le contacteur gaz-acide (1) pour être mis en contact avec les flux d'alimentation F0 et de recirculation F2, tel que décrit plus haut.

Le flux F3 de la solution de combustion P3 ainsi récupéré peut avoir une température élevée de l'ordre de 150 à 700°C, de préférence 200 à 650°C, de préférence de 300 à 500°C selon la température de vaporisation des matières volatiles indésirables contenues dans la solution de mélange, Pm. En effet, la température nécessaire à la volatilisation des matières volatilisables présentes dans la solution de mélange Pm varie selon la nature des matières présentes dans la solution de mélange Pm. Il est préférable de refroidir la solution P3 dans un échangeur de chaleur (11) (cf. Figure 2) à une température inférieure à T3 ce qui permet un plus grand choix de matériaux pour la cuve de stockage de l'acide phosphorique (et éventuellement polyphosphorique purifié) ainsi formé et refroidi, tout en maintenant la solution à l'état liquide.

La solution de combustion P3 comprenant de l'acide phosphorique (et éventuellement polyphosphorique) purifié ainsi formée et récupérée comprend une concentration en matières volatilisables indésirables inférieure à celle de la solution de mélange Pm. Par exemple, la solution de combustion P3 comprend moins de 50 % des matières volatilisables indésirables contenues dans la solution résiduaire Pr, de préférence moins de 70%, encore de préférence moins de 80% ou moins de 90%, et idéalement moins de 95 ou 99%. La solution de combustion P3 comprend une concentration en P₂O₅ plus élevée que celle de la solution de mélange Pm. Ceci s'explique par l'évaporation d'une grande partie de l'eau de la solution lors du passage de celle-ci dans la flamme. La concentration xp3 en P₂O₅ de la solution de combustion P3 est normalement supérieure à 10% P₂O₅, de préférence supérieure à 15%, de préférence supérieure à 25%, particulièrement de préférence supérieure à 40%, ou est de préférence comprise entre 30 et 76%,

Le débit Q3 de la solution de combustion P3 hors de la chambre de combustion est représentatif de la capacité de purification de l'acide phosphorique. Exprimé par unité de puissance nominale [MW⁻¹] de la chambre de combustion, le débit Q3 est de préférence compris entre 240 et 1500 kg / (h MW), de préférence entre 500 et 1000 kg / (h MW).

Les gaz de combustion G1 sont constitués principalement, d'une part, de CO₂, O₂, H₂O, d'autre part, de matières volatilisables indésirées comme par exemple des oxydes d'azote (NOx), des oxydes de soufre, des composés fluorés, chlorés ou des matières organiques, et aussi de molécules contenant du phosphore, ces dernières pouvant être présentes en des quantités pouvant varier entre 0.1 et 15% en poids de P₂O₅, selon la concentration xpm de la solution de mélange Pm. En général la teneur en P₂O₅ pouvant être présentes dans les gaz de combustion G1 varie entre 0.5 et 13% en poids, de préférence entre 1 et 10%, de préférence entre 2 et 5% P₂O₅. La température Tg1 des gaz de combustion G1 transférés est sensiblement inférieure à la température que peut atteindre la flamme car, comme discuté plus haut, la température dans l'unité de combustion chute lors de la réaction de polycondensation qui requiert beaucoup d'énergie, principalement pour évaporer l'eau de la réaction de polycondensation. Les gaz de combustion entrent dans le contacteur acide-gaz à une température Tg1 qui est de l'ordre de la température de polycondensation Tpc, et est généralement comprise entre 200 et 600°C, de préférence entre 400 et 500°C.

### Procédé - Boucle de recirculation et gaz de combustion

Comme discuté ci-dessus, une fraction de recirculation de la solution d'acide phosphorique enrichi P1 sortant du contacteur gaz-acide (1) est réintroduite dans le contacteur gaz-acide formant ainsi une boucle de recirculation alors qu'une fraction de pulvérisation Pp est acheminée vers la chambre de combustion (2). La fraction de recirculation est de préférence supérieure ou égale à la fraction de pulvérisation et est idéalement considérablement supérieure à la fraction de pulvérisation, avec des rapports Qp / Q2 du débit de pulvérisation Qp sur le débit de recirculation Q2 pouvant aller de 0.1 / 99.9 à 49 / 51 (= 0.1 à 96%). De préférence, le rapport de débits Qp / Q2, est compris entre 1 / 99 et 5 / 95 (= 1 à 5.3%).

Lors de leur introduction dans le contacteur gaz-acide, les flux d'alimentation F0 et de recirculation F2 peuvent être mélangés avant leur introduction dans le contacteur gaz-acide pour former un flux d'un mélange de la solution d'alimentation de contact P0 et de la solution d'acide phosphorique enrichi recirculé P2, tel qu'illustré dans les Figures 2&4. Alternativement, les flux F0 et F2 peuvent être contactés après avoir été introduits séparément dans le contacteur gaz-acide pour former un flux d'un mélange de la solution d'alimentation de contact P0 et de la solution d'acide phosphorique enrichi recirculé P2, tels qu'illustré dans les Figures 3&5.

La boucle de recirculation est un élément important de la présente invention. La conséquence principale de l'introduction d'une telle boucle de recirculation est que le rapport (Qg1 / (Q0+Q2)) entre le débit massique Qg1 du gaz de combustion G1 introduit dans le contacteur gaz-acide (1) et le débit massique total (Q0 + Q2) des flux d'alimentation F0 et de recirculation F2 introduits dans le contacteur gaz-acide (1), est beaucoup plus bas qu'en l'absence d'une telle boucle de recirculation. Le rapport (Qg1 / (Q0+Q2)) selon la présente invention est de préférence compris entre 0.1 et 50%, encore de préférence entre 0.5 et 20 ou inférieure à 10%, et est idéalement compris entre 1 et 7%. En l'absence d'une telle boucle de recirculation (i.e., Qg1 > 0, Q0 > 0 et Q2 = 0), le rapport (Qg1 / Q0) est considérablement plus grand, avec des valeurs supérieures à 60%, en général supérieures à 100%, indicatif d'un débit de gaz de combustion Qg1 plus important que le débit d'alimentation Q0 de solution d'alimentation P0 du contacteur.

La boucle de recirculation permet donc de contrôler le rapport entre le débit de gaz de combustion G1 et le débit total (Q0+Q2) de solutions d'alimentation d'acide phosphorique P0 et de solution d'acide phosphorique enrichi recirculé P2. En particulier il permet d'augmenter considérablement la masse de solution d'acide phosphorique contactée avec le gaz de combustion. Ceci a plusieurs avantages.

D'une part, le transfert des gouttelettes et vapeurs de P₂O₅ contenues dans les gaz de combustion G1 vers le flux du mélange des solutions P0 et P2 est beaucoup plus important. La concentration en P₂O₅ de la solution de pulvérisation formée lors du contact avec les gaz de combustion est ainsi plus élevée que si le rapport de débits Qg1 / (Q0+Q2) avait été plus élevé. Le meilleur contact gaz / liquide ainsi obtenu permet une meilleure récupération par la solution d'acide phosphorique enrichi P1 du P₂O₅ contenu dans les gaz de combustion G1. De plus, les gaz de combustion G3 après le contact avec les flux F0 et F2 sont ainsi nettoyés de leur contenu en P₂O₅, allégeant leur traitement avant de les relâcher dans l'atmosphère.

D'autre part, avec de tels rapports de débits, la température Tg3 des gaz de combustion G3 après leur contact avec les flux F0 et F2 est réduite beaucoup plus efficacement que dans le procédé décrit dans EP2411325 B1, ne nécessitant ainsi aucun autre échangeur de chaleur (ou du moins de moindre capacité), essentiel dans le procédé de EP2411325 B1 pour descendre la température des gaz de combustion à une valeur acceptable pour leur évacuation dans l'atmosphère.

### Dispositif

Le procédé de la présente invention peut être implémenté dans un dispositif comprenant une chambre de combustion (2), un contacteur gaz-acide (1) et diverses connexions fluidiques entre la chambre de combustion et le contacteur gaz-acide. Il est clair que le dispositif peut comprendre plusieurs chambres de combustion et/ou plusieurs contacteurs gaz-acide positionnés en parallèle ou en série.

### Dispositif - chambre de combustion (2)

La chambre de combustion (2) permet d'effectuer la combustion de la solution de mélange Pm, par pulvérisation de celle-ci dans la flamme. La solution de mélange Pm est formée de la solution de pulvérisation Pp mélangée à la solution résiduaire Pr pour former une solution de combustion P3 comprenant de l'acide phosphorique (et éventuellement polyphosphorique) purifié des matières volatilisables indésirables. Les parois de la chambre de combustion doivent résister au caractère corrosif des solutions de pulvérisation Pp et de résidus Pr et aux hautes températures régnant à l'intérieur de celle-ci, Il est préférable que les parois soient faites en carbure de silicium ou en carbone amorphe. Il est possible d'utiliser des doubles parois avec un gaz neutre ou les gaz de combustion circulant entre les deux parois, ce qui peut avoir des avantages en termes de température des parois, et imperméabilité de celles-ci aux solutions d'acide (poly)phosphorique.

La chambre de combustion (2) présente une ou plusieurs entrée(s) de pulvérisation (2pu) dans la chambre de combustion permettant l'introduction d'une solution de pulvérisation Pp à un débit Qp, ou d'une solution de mélange Pm à un débit (Qp + Qr), sous forme pulvérisée dans une unité de combustion située dans une partie supérieure de la chambre de combustion (cf. Figures 2&4). Dans une variante de l'invention, la chambre de combustion peut comprendre une ou plusieurs entrée(s) de résidus (2pdu) permettant l'introduction d'une solution résiduaire Pr à un débit Qr, séparée de la ou les entrée(s) de pulvérisation (2pu) (cf. Figures 3&5). Une alimentation en un gaz inerte, tel que de l'azote, peut être prévue pour optimiser la pulvérisation de la solution de pulvérisation Pp et de résidus Pr et/ou de mélange Pm, qui peuvent avoir une viscosité importante à l'entrée de la chambre de combustion. L'entrée de résidus (2pdu) est en communication fluidique avec une source d'une solution résiduaire (Pr) qui est aqueuse et comprend du phosphore et des matières volatilisables indésirables

La chambre de combustion (2) comprend une unité de combustion (2c) agencée dans la partie supérieure de la chambre de combustion, et capable de former une flamme ayant une température d'au moins 1000°C, de préférence au moins 1500°C, et même au moins 1700°C, de préférence 1800°C ± 50°C, par combustion d'un combustible en présence d'oxygène. La température de la flamme peut être contrôlée en variant le débit d'oxygène alimentant la flamme. L'unité de combustion comprend :
- un brûleur,
- des connexions fluidiques entre le brûleur et, d'une part, une source d'oxygène et, d'autre part, une source de combustible (10) permettant d'alimenter la flamme, Le contrôle du rapport entre les apports en combustible et en oxygène vers le brûleur permettent de contrôler la température de la flamme. De préférence, le combustible utilisé est choisi parmi le gaz naturel, le méthane, le butane, le propane. La source d'oxygène est généralement de l'air ou de l'oxygène.

La chambre de combustion (2) est équipée d'un séparateur gaz-liquide (9) pour séparer la solution de combustion P3 ainsi formée des gaz de combustion G1. Par exemple, les gaz de combustion peuvent être séparés de la solution de combustion par un agrandissement de la surface transversale de débit, ce qui a pour conséquence de diminuer la vitesse d'écoulement et donc l'énergie cinétique des flux de gaz G1 et de combustion F3. Comme les flux s'écoulent du haut vers le bas, par la baisse de leur énergie cinétique, les gaz vont ralentir et peuvent être déviés vers un déflecteur qui les guide vers la sortie des gaz de combustion. Grâce à leur densité plus élevée, les gouttelettes d'acide phosphorique et éventuellement polyphosphorique purifiées de la solution de combustion P3 continuent leur écoulement vers le bas par la gravité.

La chambre de combustion (2) présente une sortie de combustion (2pd) de la chambre de combustion pour récupérer une phase liquide d'acide (poly)phosphorique purifié, et agencée en aval de l'unité de combustion qui est elle-même agencée en aval de l'entrée de mélange ou de pulvérisation et de résidus, Le terme « aval » est exprimé par rapport au sens d'écoulement des solutions de pulvérisation Pp et d'acide polyphosphorique P3 dans la chambre de combustion. Comme expliqué plus haut, le sens d'écoulement est de préférence du haut vers le bas suivant la direction de la gravité. Le dispositif peut ainsi être équipé d'une cuve de stockage de l'acide phosphorique ainsi produit (non illustrée). De préférence, le dispositif comprend un échangeur de chaleur (11) agencé entre la sortie de combustion (2pd) et la cuve de stockage, afin de refroidir la solution de combustion P3 d'une température comprise entre environ 200 et 650°C à une température de l'ordre de 100 à 150°C lorsqu'elle atteint la cuve de stockage.

Enfin, la chambre de combustion (2) est munie d'une sortie d'évacuation de gaz de combustion G1 issus de la flamme. Ces gaz de combustion sont chargés de gouttelettes et vapeurs de P₂O₅ et de matières volatilisées indésirables. Ils ont une température Tg1 et ne nécessitent pas d'être refroidis avant d'être introduits dans le contacteur gaz-acide.

### Dispositif - contacteur gaz-acide (2)

Le contacteur gaz-acide (1) permet de réchauffer et d'augmenter la concentration équivalente en unités P₂O₅ de la solution d'alimentation introduite dans le contacteur, avant son entrée dans la chambre de combustion (2) afin d'optimiser le rendement de purification de l'acide phosphorique et la consommation énergétique de la réaction de polycondensation.

Le contacteur gaz-acide (1) présente une entrée d'alimentation (1pu) reliée à une source d'une solution d'alimentation P0 du contacteur ou d'un mélange de solution d'alimentation P0 du contacteur et de solution d'acide phosphorique enrichi P2. Comme discuté plus haut, la solution d'alimentation P0 du contacteur comprend entre 0 et 54% P₂O₅. de préférence de 0,1 à 50%, de préférence de 1 à 35%, encore de préférence comprise entre 15 et 20% P₂O₅. L'entrée d'alimentation (1pu) doit être dimensionnée pour permettre l'introduction de la solution d'alimentation P0 du contacteur à un débit d'alimentation Q0 ou l'introduction du mélange de solution d'alimentation P0 du contacteur et de solution d'acide phosphorique enrichi recirculée P2 à un débit (Q0 + Q2). La solution d'acide phosphorique enrichi recirculée, P2, peut également être introduite dans une entrée (1pru) d'acide phosphorique enrichi recirculé, P2, séparée de l'entrée d'alimentation(1pu).

Le contacteur gaz-acide (1) est de préférence un contacteur direct. Il comprend une entrée de gaz de combustion (1gu) permettant l'introduction dans le contacteur gaz-acide des gaz de combustion G1 provenant de la sortie d'évacuation de gaz de combustion G1. L'entrée d'alimentation (1gu) doit être dimensionnée pour permettre l'introduction des gaz de combustion G1 à un débit Qg1. Comme discuté plus haut, les gaz de combustion G1 mis en contact avec la solution d'alimentation P0 du contacteur permettent (a) d'augmenter la température de solution d'alimentation P0 du contacteur, (b) évaporer une partie de l'eau de la solution d'alimentation P0 du contacteur et (c) échanger avec la solution P0 les gouttelettes et vapeurs de P₂O₅ contenues dans le gaz de combustion G1.

Le contacteur gaz-acide (1) est muni d'une entrée de recirculation (1pru), permettant l'introduction d'une solution d'acide phosphorique enrichi recirculé P2. Dans une variante de l'invention, les flux F0 et F2 sont mélangés avant d'être introduits dans le contacteur gaz-acide et l'entrée de recirculation est alors la même que l'entrée d'alimentation (1pu). Dans une variante alternative, les entrées d'alimentation (1pu) et de recirculation (1pru) sont séparées. L'entrée de recirculation doit être dimensionnée pour permettre l'introduction de la solution d'acide phosphorique enrichi recirculé P2 à un débit d'alimentation Q2.

L'entrée de gaz (1gu), l'entrée d'alimentation (1pu) et, si elle est séparée de celle-ci, l'entrée de recirculation (1pru) sont agencées pour permettre, d'une part,
- un contact entre les flux d'alimentation F0 et flux de recirculation F2 pour former un flux (F0 + F2) d'un mélange (P0+P2) de la solution d'alimentation P0 du contacteur et de la solution d'acide phosphorique enrichi recirculé P2 et, d'autre part,
- un contact du flux du mélange ainsi formé avec le flux des gaz de combustion G1.

L'entrée de gaz (1gu) est de préférence agencée de sorte que les gaz de combustion G1 (et dénommés G2 lors du contact) s'écoulent à co-courant avec les flux d'alimentation F0 et de recirculation F2 d'acide phosphorique. Mais il est possible d'arranger l'entrée de gaz de sorte que les gaz de combustion s'écoulent à contre-courant des flux F0 et F2.

Le contacteur gaz-acide comprend de préférence un matériau de remplissage, au travers duquel percolent les flux d'alimentation F0 et de recirculation F2 de solutions d'acide phosphorique. Le matériau de remplissage est de préférence disposé sur un support perforé, par exemple une grille de support.

Le contacteur gaz-acide (1) comprend une ou plusieurs sorties d'acide phosphorique enrichi (1pd, 1prd), la ou les sorties d'acide phosphorique enrichi (1pd, 1prd) sont positionnées en aval de l'entrée de gaz (1gu), qui est elle-même positionnée en aval de l'entrée d'alimentation (1pu) et, si elle est séparée de celle-ci, l'entrée de recirculation (1pru). Le terme « aval » est exprimé par rapport au sens d'écoulement des flux d'alimentation et de recirculation des solutions d'alimentation d'acide phosphorique et d'acide phosphorique enrichi recirculé P2 dans le contacteur gaz-acide. La ou les sorties d'acide phosphorique enrichi (1pd, 1prd) permettent de sortir la solution d'acide phosphorique enrichi P1 formée dans le contacteur gaz-acide formée par le contact entre les flux F0 et F2 et les gaz de combustion G1.

Le contacteur gaz-acide (1) comprend un séparateur gaz-liquide permettant de séparer les liquides des gaz après le contact entre les gaz de combustion G1 et les solutions P0 et P1. Par exemple le contacteur gaz-acide peut comprendre un débrumiseur qui permet de récupérer d'éventuelles gouttelettes de liquide présentes dans le gaz de combustion contacté G3 avant sa sortie via la sortie de gaz (1gd).

Le contacteur gaz-acide (1) comprend également une sortie (1gd) de gaz de combustion, permettant d'évacuer du contacteur gaz-acide les gaz de combustion contactés G3 après leur contact avec le mélange des solutions P0 et P2, Le dispositif peut être suivi d'une tour de lavage des gaz de combustion contactés G3 situés en aval de la sortie (1gd) de gaz de combustion du contacteur gaz-acide, permettant d'éliminer les éventuels composés fluorés et soufrés que les gaz contiennent avant de les relâcher dans l'atmosphère.

Le dispositif est équipé d'une connexion fluidique (6) de gaz de combustion reliant une extrémité (6u) couplée à la sortie d'évacuation des gaz de combustion de la chambre de combustion (2), à une extrémité (6d) couplée à l'entrée de gaz de combustion (1gu) dans le contacteur gaz-acide (1). La température dans cette connexion fluidique (6) doit de préférence être maintenue la plus élevée possible afin qu'au niveau de l'entrée (1gu) dans le contacteur gaz-acide, les gaz de combustion G1 aient une température aussi proche que possible de la température Tg1 qu'ils ont à la sortie de la chambre de combustion, soit d'environ 200 à 600°C.

Le dispositif est équipé d'une connexion fluidique (3, 3p) reliant une extrémité amont (3u) couplée à la sortie d'acide phosphorique enrichi (1pd) du contacteur gaz acide (1), à une extrémité avale (3d) couplée à l'entrée de pulvérisation (2pu) de la chambre de combustion (2). Comme la solution d'acide phosphorique enrichi P1 a récupéré la majeure partie des molécules de phosphore emportées par les gaz de combustion G1, la connexion fluidique (3,3p) permet de réinjecter ces molécules dans la chambre de combustion afin d'obtenir une solution de combustion P3 la plus riche possible en P₂O₅. La solution d'acide phosphorique enrichi P1 a une température supérieure à celle de la solution d'alimentation P0 du contacteur, ce qui permet une meilleure gestion de l'énergie calorifique du procédé en injectant dans la chambre de combustion une solution déjà à une température relativement haute. Dans le cas où la production de PPA est désirée, la plus haute concentration en P₂O₅ et la plus haute température de la solution d'acide phosphorique enrichi P1 permettent d'augmenter le rendement de concentration dans la chambre de combustion.

Cette amélioration de transfert de molécules d'acide phosphorique et de rendement en concentration est rendue possible grâce à la boucle de recirculation permettant de réintroduire dans le contacteur gaz-acide une partie du flux d'acide phosphorique P1 sorti du même contacteur gaz-acide. Ainsi le dispositif comprend en outre une connexion fluidique de recirculation (3r) reliant une extrémité amont couplée soit
- à une sortie d'acide phosphorique enrichi recirculé (1prd) du contacteur gaz-acide (1) , soit
- à un point d'embranchement (5v) avec la première connexion fluidique (3),
- à un point d'embranchement (4r) avec la première connexion fluidique (3u),
à une extrémité avale (3r) couplée à l'entrée de recirculation (1pru) ou (1pu) du contacteur gaz-acide.

Le dispositif est pourvu de moyens pour contrôler et maintenir un rapport, Qp / (Qp + Q2), entre un débit massique de pulvérisation Qp s'écoulant dans la première connexion fluidique (3) et un débit massique total (Qp + Q2) défini comme la somme du débit massique de pulvérisation Qp et d'un débit massique de recirculation Q2 s'écoulant dans la connexion fluidique de recirculation (3r) à une valeur inférieure à 50%, de préférence inférieure à 10%, de préférence inférieure à 5%, encore de préférence inférieure à 2.5% et dans lequel le rapport Qp / (Qp + Q2) a une valeur supérieure à 0.1%, de préférence supérieure à 0.5%.

Comme illustré à la Figure 2, les connexions fluidiques (3p) et (3r) peuvent être désolidarisées sur toute leur longueur entre le contacteur gaz-acide et la chambre de combustion avec, d'une part, la connexion fluidique de pulvérisation (3p) reliant une première sortie d'acide phosphorique enrichi (1pd) à l'entrée d'acide phosphorique enrichi (2pu) dans la chambre de combustion et, d'autre part, la connexion fluidique de recirculation (3r) reliant une seconde sortie d'acide phosphorique enrichi (1prd) à l'entrée d'acide phosphorique enrichi recirculé (1pu) du contacteur gaz-acide ou à la connexion d'alimentation (3a) alimentant le contacteur gaz-acide en solution d'alimentation P0 du contacteur. Chacune des connexions fluidiques de pulvérisation (3p) et de recirculation (3r) étant munie d'une pompe (4, 4r) dimensionnées pour maintenir à une valeur désirée le rapport, Qp / (Qp + Q2) ou d'un système de transfert de fluides.

Dans une variante alternative illustrée aux Figures 3 à 5 le contacteur gaz-acide est muni d'une sortie (1pd) unique d'acide phosphorique enrichi P1 du contacteur gaz-acide qui est couplée à une première connexion fluidique (3). Les parties amont des connexions fluidiques de pulvérisation (3p) et de recirculation (3r) sont couplées à un point d'embranchement (5), formant ainsi avec la première connexion fluidique (3) un embranchement en T ou Y. Dans cette variante, on peut utiliser différents moyens pour contrôler et maintenir le rapport, Qp / (Qp + Q2) à la valeur désirée.

Dans une première variante illustrée à la Figure 5, les moyens pour assurer un rapport, Qp / (Qp + Q2) à la valeur désirée comprennent une pompe (4) agencée sur la connexion fluidique de pulvérisation (3p) et ayant une capacité de pompage d'un liquide à un débit de pulvérisation Qp et une pompe de recirculation (4r) agencée sur la connexion fluidique de recirculation (3r) et ayant une capacité de pompage d'un liquide à un débit de recirculation Q2,

Dans une seconde variante illustrée aux Figures 3 et 4, les moyens pour assurer un rapport, Qp / (Qp + Q2) comprennent une pompe (4) agencée sur la première connexion fluidique (3) en amont du point d'embranchement (5) et ayant une capacité de pompage d'un liquide à un débit principal (Qp+ Q2) et une ou plusieurs vannes (5v) (p.ex., une vanne à trois voies) agencées au point d'embranchement (5) et permettant de diviser le débit principal en un débit de pulvérisation Qp vers la connexion fluidique de pulvérisation (3p) et en un débit de recirculation Q2 vers la connexion fluidique de recirculation (3r),

Dans une troisième variante (non illustrée), les moyens pour assurer le rapport, Qp / (Qp + Q2) comprennent une pompe (4) agencée sur la première connexion fluidique (3) en amont du point d'embranchement (5) et ayant une capacité de pompage d'un liquide à un débit principal (Qp+ Q2) et des tuyauteries formant les connexions fluidiques de pulvérisation (3p) et de recirculation (3r) dimensionnées de sorte à obtenir le rapport Qp / (Qp + Q2) désiré. Cette solution est moins flexible que les deux premières en ce qu'une fois les tuyauteries dimensionnées, le rapport Qp / (Qp + Q2) ne peut être varié facilement, ce qui n'est pas nécessairement un problème si le rapport ne doit pas varier pendant la durée de vie du dispositif.

Dans une quatrième variante (non illustrée), les moyens pour assurer le rapport, Qp / (Qp + Q2) comprennent une pompe (4) agencée sur la première connexion fluidique (3) en amont du point d'embranchement (5) et ayant une capacité de pompage d'un liquide à un débit principal (Qp+ Q2) et formant les connexions fluidiques de pulvérisation (3p) et de recirculation (3r) ainsi que des vannes réglées de manière à obtenir le rapport Qp / (Qp + Q2) désiré.

Le Tableau 2 liste une série de fourchettes de valeurs des différents paramètres adaptées pour la mise en oeuvre du procédé de la présente invention.

**Tableau 2 : Exemples de valeurs de paramètres adaptées au procédé de la présente invention**

| | **Ti** | | **xpi** | | **Qi** | |
|---|---|---|---|---|---|---|
| | **°C** | | **%[P₂O₅]** | | **[kg** / **(h MW)]** | |
| | **min** | **max** | **Min** | **max** | **Min** | **max** |
| F0 | 20 | 200 | ≥0% | 54% | 100 | 3000 |
| F1 | 100 | 300 | > F0 | 60% | 600 | 123000 |
| F2 | 100 | 300 | > F0, = F1 | 60% | 300 | 120000 |
| Fp | 100 | 300 | > F0, = F1 | 60% | 300 | 3000 |
| Fr | 20 | 200 | ≥ 1% | 50% | 5 | 1500 |
| Fm | 20 | 300 | ≥ 1% | 60% | 305 | 3000 |
| F3 | 150 | 700 | > Fm, | 76% | 240 | 1500 |
| G1 | 200 | 600 | 0.1% | 15% | -- | -- |
| G3 | 100 | 250 | < G1 | 1% | -- | -- |

| **#** | **Caractéristique** |
|---|---|
| 1 | Contacteur gaz-acide |
| 1gd | Sortie de gaz de combustion du contacteur gaz-acide |
| 1gu | Entrée de gaz de combustion dans le contacteur gaz-acide |
| 1pd | Sortie de solution d'acide phosphorique enrichi, P1, du contacteur gaz-acide |
| 1pu | Entrée d'alimentation de la solution de contact, P0, ou de mélange (P0+P2) dans le contacteur gaz-acide |
| 1 pru | Entrée d'acide phosphorique enrichi de recirculation, P2, dans le contacteur gaz-acide (optionnelle). |
| 2 | Chambre de combustion |
| 2c | Unité de combustion |
| 2pd | Sortie de combustion, P3, de la chambre de combustion |
| 2pdu | Entrée de résidus, Pr, dans la chambre de combustion |
| 2pu | Entrée de solution de pulvérisation, Pp, dans la chambre de combustion ou entrée combinée des flux d'alimentation directe et des flux de pulvérisation |
| 3 | Première connexion fluidique |
| 3a | Connexion fluidique d'alimentation |
| 3d | Extrémité avale de la première connexion fluidique (3) |
| 3p | Connexion fluidique de pulvérisation |
| 3r | Connexion fluidique de recirculation vers le contacteur gaz-acide (1) |
| 3rd | Extrémité avale de la connexion fluidique de recirculation (3r) |
| 3u | Extrémité amont de la connexion fluidique de pulvérisation (3p) ou de la première connexion fluidique (3) |
| 4 | Pompe |
| 4r | Pompe de recirculation |
| 5v | Vanne ou jeu de vannes (ex., vanne à trois voies) |
| 6 | Connexion fluidique de gaz de combustion |
| 6d | Sortie de la connexion de gaz de combustion |
| 6u | Entrée de la connexion de gaz de combustion |
| 10 | Source de combustible pour l'unité de combustion (10) |
| 11 | Echangeur de chaleur |
| Fp | Flux de pulvérisation de solution d'acide phosphorique enrichi |
| F2 | Flux de recirculation de solution d'acide phosphorique enrichi recirculé |
| F3 | Flux de solution de combustion |
| Fr | Flux résiduaire de solution résiduaire Pr |
| Fp | Flux de pulvérisation de solution d'acide phosphorique enrichi |
| Fm | Flux de mélange de solution de mélange Fm (Fr + Fp) |
| G1 | Gaz de combustion |
| G3 | Gaz de combustion contactés |
| P0 | Solution d'alimentation |
| P0+P2 | Mélange de la solution d'alimentation P0 du contacteur et de la solution d'acide phosphorique enrichi recirculé P2 |
| P1 | Solution d'acide phosphorique enrichi |
| P2 | Solution d'acide phosphorique enrichi recirculé |
| P3 | Solution de combustion |
| Pr | Solution résiduaire |
| Pp | Solution de pulvérisation |
| Pm | Solution de mélange (= Pr + Pp) |
| Q0 | Débit d'alimentation de la solution d'alimentation P0 du contacteur |
| Q1 | Débid'acide phosphorique enrichi en sortie du contacteur (= Q2 + Qp) |
| Q2 | Débit de recirculation de la solution d'acide phosphorique enrichi recirculé |
| Q3 | Débit de la solution de combustion |
| Qg1 | Débit des gaz de combustion vers le contacteur gaz-acide (1) |
| Qg2 | Débit des gaz de combustion dans le contacteur gaz-acide (1) |
| Gg3 | Débit des gaz de combustion contactés hors du contacteur gaz-acide (1) |
| Qm | Débit de la solution de mélange Pm |
| Qp | Débit de pulvérisation de la solution de pulvérisation Pp |
| Qr | Débit de la solution résiduaire Pr |
| T0 | Température de la solution d'alimentation P0 du contacteur |
| T1 | Température de la solution d'acide phosphorique enrichi P1 |
| T2 | Température de la solution d'acide phosphorique enrichi recirculé P2 |
| T3 | Température de la solution de combustion P3 |
| Tg1 | Température des gaz de combustion G1 |
| Tg3 | Température des gaz de combustion contactés G3 |

## Revendications

1. Procédé de purification d'une solution résiduaire aqueuse comprenant des molécules de phosphore et des matières volatilisables indésirables comprenant les étapes suivantes :
(a) introduire dans un contacteur gaz-acide (1), un flux d'alimentation F0 d'une solution d'alimentation P0 qui est aqueuse et comprenant des molécules de phosphore de préférence sous forme d'espèces de type orthophosphate à une concentration massique, xp0, comprise entre 0 et 54% équivalent en unités de P₂O₅,
(b) introduire dans le contacteur gaz-acide (1) un flux de recirculation F2 de solution d'acide phosphorique enrichi recirculé P2,
(c) introduire dans le contacteur gaz-acide (1) des gaz de combustion G1,
(d) contacter les flux d'alimentation F0 et de recirculation F2 et les gaz de combustion G1 pour former dans le contacteur gaz-acide, d'une part,
• une solution d'acide phosphorique enrichi P1 comprenant une concentration massique, xp1, de teneur P₂O₅ qui est supérieure à xp0 (xp1 > xp0) et, d'autre part,
• des gaz de combustion contactés G3,
(e) séparer les gaz de combustion contactés G3 de la solution d'acide phosphorique enrichi P1, puis
• évacuer les gaz de combustion contactés G3 du contacteur gaz-acide (1), et
• sortir la solution d'acide phosphorique enrichi P1 du contacteur gaz-acide (1),
(f) former à partir de ladite solution d'acide phosphorique enrichi P1, d'une part,
• un flux de recirculation F2 de solution d'acide phosphorique enrichi recirculé P2 pour l'introduire dans le contacteur gaz-acide (1) tel que défini à l'étape (b) et, d'autre part,
• un flux de pulvérisation Fp de la solution d'acide phosphorique enrichi P1 pour l'introduire dans une chambre de combustion (2),
(g) pulvériser à travers une flamme brûlant dans la partie supérieure de la chambre de combustion (2) un flux de mélange Fm d'une solution de mélange (Pm) comprenant du phosphore à une concentration massique xpm et des matières volatilisables indésirables, le flux de mélange étant formé par, d'une part,
• la solution d'acide phosphorique enrichi P1 et optionnellement, d'autre part,
• un flux résiduaire Fr d'une solution résiduaire Pr aqueuse comprenant une concentration massique xpr d'au moins 1% P₂O₅,
pour :
• évaporer de l'eau et ainsi concentrer la solution de mélange Pm,
• oxyder éventuellement et dans tous les cas évaporer les impuretés volatilisables indésirables,
• former des gaz de combustion G1, et
• former une solution de combustion P3 ayant,
- une concentration massique xp3 en P₂O₅ supérieure à la concentration de la solution de mélange Pm, et
- une teneur en impuretés volatilisables inférieure à celle de la solution de mélange Pm,
(h) séparer la solution de combustion P3 des gaz de combustion G1 et
• récupérer la solution de combustion P3, et
• transférer les gaz de combustion G1 dans le contacteur gaz-acide (1) tel que défini à l'étape (c),
dans lequel les matières volatilisables indésirables sont introduites dans le flux résiduaire Fr de la solution résiduaire Pr aqueuse et / ou dans le flux d'alimentation F0 de la solution d'alimentation P0.

2. Procédé selon la revendication 1, dans lequel
• la solution d'alimentation P0 comprend une concentration xp0 en comprise entre 0.1 et 50%, de préférence de 1 à 35%, de préférence de 5 à 20% P₂O₅ et dans lequel
• un débit Q0 de la solution d'alimentation P0 dans le contacteur exprimé par unité de puissance nominale [MW⁻¹] de la chambre de combustion est de préférence compris entre 100 et 3000 kg / (h MW), de préférence entre 500 et 2500 kg / (h MW).

3. Procédé selon la revendication 1 ou 2, dans lequel,
• la solution d'acide phosphorique enrichi P1 est identique à la solution d'acide phosphorique enrichi recirculé P2 et comprend une concentration xp1 en phosphore supérieure ou égale à 1%, de préférence inférieure à 60%, encore de préférence comprise entre 5 et 50%, préférentiellement entre 10 et 40% P₂O₅ et dans lequel
• un débit total, Q1 = (Qp + Q2), de la solution P1 hors du contacteur exprimé par unité de puissance nominale [MW⁻¹] de la chambre de combustion est de préférence compris entre 600 et 123000 kg / (h MW), de préférence entre 1000 et 50000 kg / (h MW) et
• un rapport, Qp / (Qp + Q2), entre le débit massique Qp du flux de pulvérisation Fp et le débit massique total (Qp + Q2) est de préférence inférieur à 50%, de préférence inférieur à 10%, de préférence inférieur à 5%, encore de préférence inférieur à 2.5% et dans lequel le rapport Qp / (Qp + Q2) est supérieur à 0.1%, de préférence supérieur à 0.5%.

4. Procédé selon l'une quelconque des revendications précédentes, dans lequel,
• la solution résiduaire Pr comprend une concentration xpr en phosphore supérieure ou égale à 2%, de préférence au moins 5%, encore de préférence au moins 10%, de préférence au moins 20% P₂O₅,
• la solution résiduaire Pr comprend une concentration xpv de matières volatilisables indésirables d'au moins 5 ppm, de préférence d'au moins 10 ppm, de préférence d'au moins 100 ppm, de préférence d'au moins 1%, de préférence d'au moins 5%, de préférence d'au moins 10%, encore de préférence d'au moins 25% en poids par rapport au poids total de la solution, et dans lequel
• un débit Qr de la solution résiduaire Pr dans la chambre de combustion exprimé par unité de puissance nominale [MW⁻¹] de la chambre de combustion est non-nul et de préférence compris entre 5 et 1500 kg / (h MW), de préférence entre 400 et 1000 kg / (h MW).

5. Procédé selon l'une quelconque des revendications précédentes, dans lequel,
• un rapport Qr / (Qr + Q0) est compris entre 0 et 99%, de préférence entre 5 et 90%, encore de préférence entre 10 et 80%, ou encore entre 15 et 45%, et dans lequel
• le flux de mélange (Fm) comprend une concentration en phosphore (xpm), supérieure à 1% P₂O₅ (xpm > 1% P₂O₅,)
Et dans lequel Q0, Qp et Qr sont des débits massiques des solutions d'alimentation (P0), d'acide phosphorique enrichi P1 et de résidus Pr, respectivement.

6. Procédé selon l'une quelconque des revendications précédentes, dans lequel,
• la solution de mélange Pm comprend une concentration xpm supérieure à 2%, de préférence supérieure à 5%, encore de préférence supérieure à 20%, encore de préférence supérieure à 30%, de préférence supérieure à 40%, et encore de préférence comprise entre 45 et 60% P₂O₅.
• la solution de mélange Pm comprend une concentration xpv de matières volatilisables indésirables d'au moins 5 ppm, de préférence d'au moins 10 ppm, de préférence d'au moins 100 ppm, de préférence d'au moins 1%, de préférence d'au moins 5%, de préférence d'au moins 10%, encore de préférence d'au moins 25% en poids par rapport au poids total de la solution, et dans lequel,
• un débit Qm de la solution de mélange Pm dans la chambre de combustion exprimé par unité de puissance nominale [MW⁻¹] de la chambre de combustion est de préférence compris entre 305 et 3000 kg / (h MW), de préférence entre 200 et 2000 kg / (h MW).

7. Procédé selon l'une quelconque des revendications précédentes, dans lequel,
• La solution de combustion P3 comprend une concentration xp3 en phosphore supérieure à 1% équivalent en unités de P₂O₅, de préférence supérieure à 10%, de préférence supérieure à 25%, particulièrement de préférence supérieure à 40%, ou est de préférence comprise entre 30 et 76%, et dans lequel,
• le débit Q3 de la solution P3 de combustion hors de la chambre de combustion exprimé par unité de puissance nominale [MW⁻¹] de la chambre de combustion est de préférence compris entre 240 et 1500 kg / (h MW), de préférence entre 600 et 3000 kg / (h MW).

8. Procédé selon l'une quelconque des revendications précédentes, dans lequel les flux d'alimentation F0 et de recirculation F2 sont soit,
• mélangés avant leur introduction dans le contacteur gaz-acide pour former un flux d'un mélange de la solution d'alimentation P0 et de la solution d'acide phosphorique enrichi recirculé P2, soit
• contactés après avoir été introduits séparément dans le contacteur gaz-acide pour former un flux d'un mélange de la solution d'alimentation F0 et de la solution d'acide phosphorique enrichi recirculé P2.

9. Procédé selon l'une quelconque des revendications précédentes, dans lequel
• Un débit résiduaire Qr de la solution résiduaire Pr est non-nul,
• La solution résiduaire Pr et, de préférence, la solution de pulvérisation Pp comprennent des matières volatilisables indésirables, et dans lequel
le flux résiduaire Fr et le flux de pulvérisation Fp sont soit,
• mélangés pour former le flux de mélange Fm avant d'être pulvérisés dans la flamme dans la chambre de combustion, soit
• pulvérisés séparément dans la chambre de combustion pour former le flux de mélange Fm dans la flamme ou juste avant d'atteindre la flamme.

10. Procédé selon l'une quelconque des revendications précédentes, dans lequel le contact entre les flux d'alimentation F0 et de recirculation F2 et les gaz de combustion G1 à l'étape (d) s'effectue à co-courant ou à contre-courant, de préférence à co-courant en s'écoulant depuis une partie supérieure vers un partie inférieure du contacteur gaz-acide et dans lequel au cours de l'étape (d) de contact, un rapport (Qg1 / (QO+Q2)) entre un débit massique Qg1 du gaz de combustion G1 introduit dans le contacteur gaz-acide (1) et un débit massique total (Q0 + Q2) des flux d'alimentation de contact F0 et de recirculation F2 introduits dans le contacteur gaz-acide (1), est compris entre 0.1 et 50%, de préférence entre 0.5 et 10%, encore de préférence entre 1 et 7%.

11. Dispositif de production d'acide phosphorique purifié P3 suivant un procédé selon l'une quelconque des revendications précédentes, comprenant :
(A) une chambre de combustion (2) présentant :
• une entrée de pulvérisation (2pu) dans la chambre de combustion permettant l'introduction à un débit d'une solution d'acide phosphorique enrichi P1 sous forme pulvérisée dans une unité de combustion (2c),
• une entrée de résidus (2pdu) dans la chambre de combustion ou en amont de l'entrée de pulvérisation (2pu) permettant l'introduction d'une solution résiduaire Pr ou d'un mélange de solutions résiduaires Pr et d'acide phosphorique enrichi (P1) sous forme pulvérisée dans une unité de combustion (2c),
• l'unité de combustion (2c) étant agencée dans la partie supérieure de la chambre de combustion, et étant capable de former une flamme ayant une température d'au moins 1500°C par combustion d'un combustible, ladite unité de combustion comprenant :
∘ un brûleur,
∘ des connexions fluidiques entre le brûleur et, d'une part, une source d'oxygène et, d'autre part, une source de combustible (10) permettant d'alimenter la flamme,
• une sortie de combustion (2pd) de la chambre de combustion pour récupérer une solution de combustion P3 en phase liquide, et agencée en aval de l'unité de combustion qui est elle-même agencée en aval de l'entrée de pulvérisation (2pu) et de résidus (2pdu),
• une sortie d'évacuation de gaz de combustion G1 issu de la flamme
(B) un contacteur gaz-acide (1) présentant
• une entrée d'alimentation (1pu) reliée à une source d'une solution d'alimentation P0, permettant l'introduction à un débit d'alimentation de contact Q0 d'une solution d'alimentation P0,
• une entrée de gaz de combustion (1gu) permettant l'introduction dans le contacteur gaz-acide des gaz de combustion G1 à un débit Qg1,
• une entrée de recirculation (1pru) identique ou différente de l'entrée d'alimentation de contact (1pu), permettant l'introduction d'une solution d'acide phosphorique enrichi recirculé P2 à un débit de recirculation Q2,
• les entrées d'alimentation (1pu) et/ou de recirculation (1pru) et l'entrée de gaz (1gu) étant agencées pour permettre, d'une part,
∘ un contact entre le flux d'alimentation F0 et flux de recirculation F2 pour former un flux d'un mélange de la solution d'alimentation P0 et de la solution d'acide phosphorique enrichi recirculé P2 et, d'autre part
∘ un contact du mélange ainsi formé avec les gaz de combustion G1,
• une ou plusieurs sorties d'acide phosphorique enrichi (1pd),
(C) une connexion fluidique (6) de gaz de combustion reliant une extrémité (6u) couplée à la sortie d'évacuation des gaz de combustion de la chambre de combustion (2), à une extrémité (6d) couplée à l'entrée de gaz de combustion (1gu) dans le contacteur gaz-acide (1),
(D) une première connexion fluidique de pulvérisation (3p) reliant une extrémité amont (3u) couplée
• à la sortie d'acide phosphorique enrichi (1pd) du contacteur gaz acide (1) ou
• à un point d'embranchement (5) avec une première connexion fluidique (3) qui est couplée à la sortie d'acide phosphorique enrichi (1pd),
à une extrémité avale (3d) couplée à l'entrée d'acide phosphorique enrichi (2pu) dans la chambre de combustion (2),
**Caractérisé en ce que** le dispositif comprend en outre
(E) une connexion fluidique de recirculation (3r) reliant une extrémité amont couplée,
• à une sortie d'acide phosphorique enrichi recirculé (1pd) du contacteur gaz-acide (1) ou
• à un point d'embranchement (5) avec la première connexion fluidique (3),
à une extrémité avale couplée,
• à l'entrée de recirculation (1pru) du contacteur gaz-acide (1) ou
• à une connexion d'alimentation (3a) alimentant le contacteur gaz-acide en solution d'alimentation P0, et
(F) des moyens pour contrôler et maintenir un rapport, Qp / (Qp + Q2), entre un débit massique de pulvérisation Qp s'écoulant dans la connexion fluidique de pulvérisation (3p) et un débit massique total (Qp + Q2) défini comme la somme du débit massique de pulvérisation Qp et d'un débit massique de recirculation Q2 s'écoulant dans la connexion fluidique de recirculation (3r) à une valeur inférieure à 50%, de préférence inférieure à 10%, de préférence inférieure à 5%, encore de préférence inférieure à 2.5% et dans lequel le rapport Qp / (Qp + Q2) a une valeur supérieure à 0.1%, de préférence supérieure à 0.5%.

12. Dispositif selon la revendication 11, dans lequel l'entrée de résidus (2pdu) est en communication fluidique avec une source d'une solution résiduaire Pr qui est aqueuse et comprend des molécules de phosphore sous forme orthophosphate et/ou polyphosphate et des matières volatilisables indésirables.

## Patentansprüche

1. Verfahren zur Reinigung eines Phosphormoleküle und unerwünschte verdampfbare Stoffe umfassenden wässrigen Lösungsrückstands, das die folgenden Schritte umfasst:
(a) das Einführen eines Zufuhrstroms F0 einer Zufuhrlösung P0, die wässrig ist und Phosphormoleküle vorzugsweise in Form von Spezies vom Orthophosphattyp mit einer Massenkonzentration xp0 zwischen 0 und 54 Äquivalent von P₂O₅-Einheiten umfasst, in einen Gas-Säure-Kontaktor (1),
(b) das Einführen eines Rückführstroms F2 von zurückgeführter angereicherter Phosphorsäurelösung P2 in den Gas-Säure-Kontaktor (1),
(c) das Einführen von Verbrennungsgasen G1 in den Gas-Säure-Kontaktor (1),
(d) das In-Kontakt-Bringen des Zufuhrstroms F0 und des Rückführstroms F2 und der Verbrennungsgase G1, um im Gas-Säure-Kontaktor Folgendes zu bilden: einerseits
• eine angereicherte Phosphorsäurelösung P1, die eine Massenkonzentration xp1 mit einem P₂O₅-Gehalt umfasst, der größer als xp0 ist (xp1 > xp0), und andererseits
• in Kontakt gebrachte Verbrennungsgase G3,
(e) das Abtrennen der in Kontakt gebrachten Verbrennungsgase G3 von der angereicherten Phosphorsäurelösung P1 und dann
• das Abführen der in Kontakt gebrachten Verbrennungsgase G3 vom Gas-Säure-Kontaktor (1) und
• das Entfernen der angereicherten Phosphorsäurelösung P1 aus dem Gas-Säure-Kontaktor (1),
(f) das Bilden aus der angereicherten Phosphorsäurelösung P1 einerseits
• eines Rückführstroms F2 von zurückgeführter angereicherter Phosphorsäurelösung P2 zur Einführung in den Gas-Säure-Kontaktor (1) gemäß der Definition in Schritt (b) und andererseits
• eines Sprühstroms Fp der angereicherten Phosphorsäurelösung P1 zur Einführung in eine Brennkammer (2),
(g) das Sprühen eines Mischstroms Fm einer Phosphor mit einer Massenkonzentration xpm und unerwünschte verdampfbare Stoffe umfassenden Mischlösung (Pm) durch eine im oberen Abschnitt der Brennkammer (2) brennende Flamme, wobei der Mischstrom aus Folgendem gebildet wird: einerseits
• der angereicherten Phosphorsäurelösung P1 und gegebenenfalls andererseits
• einem Rückstandsstrom Fr eines wässrigen Lösungsrückstands Pr, der eine Massenkonzentration xpr von mindestens 1 % P₂O₅ aufweist,
um:
• das Wasser zu verdampfen und so die Mischlösung Pm zu konzentrieren,
• die unerwünschten verdampfbaren Verunreinigungen gegebenenfalls zu oxidieren und auf jeden Fall zu verdampfen,
• Verbrennungsgase G1 zu bilden und
• eine Verbrennungslösung P3 zu bilden, die Folgendes aufweist:
- eine P₂O₅-Massenkonzentration xp3, die höher als die Konzentration der Mischlösung Pm ist, und
- einen Gehalt an verdampfbaren Verunreinigungen, der niedriger als derjenige der Mischlösung Pm ist,
(h) das Abtrennen der Verbrennungslösung P3 von Verbrennungsgasen G1 und
• das Zurückgewinnen der Verbrennungslösung P3 und
• das Überführen der Verbrennungsgase G1 in den Gas-Säure-Kontaktor (1) gemäß der Definition in Schritt (c),
wobei die unerwünschten verdampfbaren Stoffe in den Rückstandsstrom Fr des wässrigen Lösungsrückstands Pr und/oder in den Zufuhrstrom F0 der Zufuhrlösung P0 eingeführt werden.

2. Verfahren nach Anspruch 1, wobei
• die Zufuhrlösung P0 eine Konzentration xp0 zwischen 0,1 und 50 %, vorzugsweise zwischen 1 bis 35 %, vorzugsweise zwischen 5 und 20 % P₂O₅ aufweist und wobei
• ein Durchsatz Q0 der Zufuhrlösung P0 im Kontaktor, ausgedrückt als Einheit der Nennleistung [MW⁻¹] der Brennkammer, vorzugsweise zwischen 100 und 3000 kg/(hMW), vorzugsweise zwischen 500 und 2500 kg/(hMW), beträgt.

3. Verfahren nach Anspruch 1 oder 2, wobei
• die angereicherte Phosphorsäurelösung P1 mit der zurückgeführten angereicherten Phosphorsäurelösung P2 identisch ist und eine Phosphorkonzentration xp1 von mehr als oder gleich 1 %, vorzugsweise von weniger als 60 %, noch mehr bevorzugt zwischen 5 und 50 %, bevorzugt zwischen 10 und 40 % P₂O₅, umfasst und wobei
• ein Gesamtdurchsatz Q1 = (Qp + Q2) der Lösung P1 außerhalb des Kontaktors, ausgedrückt als Einheit der Nennleistung [MW⁻¹] der Brennkammer, vorzugsweise zwischen 600 und 123000 kg/(hMW), vorzugsweise zwischen 1000 und 50000 kg/(hMW), beträgt, und
• ein Verhältnis Qp / (Qp + Q2) zwischen dem Massendurchsatz Qp des Sprühstroms Fp und dem gesamten Massendurchsatz (Qp + Q2) vorzugsweise weniger als 50 %, vorzugsweise weniger als 10 %, vorzugsweise weniger als 5 %, noch mehr bevorzugt weniger als 2,5 % beträgt und wobei das Verhältnis Qp / (Qp + Q2) größer als 0,1 %, vorzugsweise größer als 0,5 % ist.

4. Verfahren nach einem der vorhergehenden Ansprüche, wobei:
• der Lösungsrückstand Pr eine Phosphorkonzentration xpr vom mehr als oder gleich 2 %, vorzugsweise mindestens 5 %, noch mehr bevorzugt mindestens 10 %, vorzugsweise mindestens 20 % P₂O₅, aufweist,
• der Lösungsrückstand Pr eine Konzentration xpv von unerwünschten verdampfbaren Stoffen von mindestens 5 Gew.-ppm, vorzugsweise mindestens 10 Gew.-ppm, vorzugsweise mindestens 100 Gew.-ppm, vorzugsweise mindestens 1 Gew.-%, vorzugsweise mindestens 5 Gew.-%, vorzugsweise mindestens 10 Gew.-%, noch mehr bevorzugt mindestens 25 Gew.-%, bezogen auf das Gesamtgewicht der Lösung, umfasst, und wobei
• ein Durchsatz Qr des Lösungsrückstands Pr in der Brennkammer, ausgedrückt als Einheit der Nennleistung [MW⁻¹] der Brennkammer, ungleich null ist und vorzugsweise zwischen 5 und 1500 kg/(hMW), vorzugsweise zwischen 400 und 1000 kg/(hMW), beträgt.

5. Verfahren nach einem der vorhergehenden Ansprüche, wobei:
• ein Verhältnis Qr / (Qr + Q0) zwischen 0 und 99 %, vorzugsweise zwischen 5 und 90 %, noch mehr bevorzugt zwischen 10 und 80 % oder sogar zwischen 15 und 45 % beträgt, und wobei
• der Mischstrom (Fm) eine Phosphorkonzentration (xpm) vom mehr als 1 % P₂O₅ (xpm > 1 % P₂O₅) umfasst,
und wobei Q0, Qp bzw. Qr die Massendurchsätze der Zufuhrlösung (P0), der angereicherten Phosphorsäurelösung P1 bzw. des Lösungsrückstands Pr sind.

6. Verfahren nach einem der vorhergehenden Ansprüche, wobei:
• die Mischlösung Pm eine Konzentration xpm von mehr als 2 %, vorzugsweise mehr als 5 %, noch mehr bevorzugt mehr als 20 %, noch mehr bevorzugt mehr als 30 %, vorzugsweise mehr als 40 % und noch mehr bevorzugt zwischen 45 und 60 % P₂O₅ umfasst,
• die Mischlösung Pm eine Konzentration xpv von unerwünschten verdampfbaren Stoffen von mindestens 5 Gew.-ppm, vorzugsweise mindestens 10 Gew.-ppm, vorzugsweise mindestens 100 Gew.-ppm, vorzugsweise mindestens 1 Gew.-%, vorzugsweise mindestens 5 Gew.-%, vorzugsweise mindestens 10 Gew.-%, noch mehr bevorzugt mindestens 25 Gew.-%, bezogen auf das Gesamtgewicht der Lösung, umfasst, und wobei
• ein Durchsatz Qm der Mischlösung Pm in der Brennkammer, ausgedrückt als Einheit der Nennleistung [MW⁻¹] der Brennkammer, vorzugsweise zwischen 305 und 3000 kg/(hMW), vorzugsweise zwischen 200 und 2000 kg/(hMW), beträgt.

7. Verfahren nach einem der vorhergehenden Ansprüche, wobei:
• die Verbrennungslösung P3 eine Phosphorkonzentration xp3 von mehr als 1 % Äquivalent von P₂O₅-Einheiten, vorzugsweise mehr als 10 %, vorzugsweise mehr als 25 %, besonders bevorzugt mehr als 40 % umfasst oder vorzugsweise zwischen 30 und 76 % beträgt, und wobei
• der Durchsatz Q3 der Verbrennungslösung P3 außerhalb der Brennkammer, ausgedrückt als Einheit der Nennleistung [MW⁻¹] der Brennkammer, vorzugsweise zwischen 240 und 1500 kg/ (hMW) , vorzugsweise zwischen 600 und 3000 kg/(hMW), beträgt.

8. Verfahren nach einem der vorhergehenden Ansprüche, wobei der Zufuhrstrom F0 und der Rückführstrom F2 entweder
• vor ihrer Einführung in den Gas-Säure-Kontaktor vermischt werden, um einen Strom einer Mischung der Zufuhrlösung P0 mit der zurückgeführten angereicherten Phosphorsäurelösung P2 zu bilden, oder
• nach ihrer getrennten Einführung in den Gas-Säure-Kontaktor in Kontakt gebracht werden, um einen Strom einer Mischung der Zufuhrlösung F0 mit der zurückgeführten angereicherten Phosphorsäurelösung P2 zu bilden.

9. Verfahren nach einem der vorhergehenden Ansprüche, wobei
• ein Rückstandsdurchsatz Qr des Lösungsrückstands Pr ungleich null ist,
• der Lösungsrückstand Pr und vorzugsweise die Sprühlösung Pp unerwünschte verdampfbare Stoffe umfassen und wobei
der Rückstandsstrom Fr und der Sprühstrom Fp entweder
• vermischt werden, um den Mischstrom Fm zu bilden, bevor sie in die Flamme in der Brennkammer gesprüht werden, oder
• getrennt in die Brennkammer gesprüht werden, um den Mischstrom Fm in der Flamme oder unmittelbar vor dem Erreichen der Flamme zu bilden.

10. Verfahren nach einem der vorhergehenden Ansprüche, wobei der Kontakt zwischen dem Zufuhrstrom F0 und dem Rückführstrom F2 und den Verbrennungsgasen G1 in Schritt (d) im Gleichstrom oder im Gegenstrom, vorzugsweise im Gleichstrom, erfolgt, indem sie von einem oberen Abschnitt in Richtung eines unteren Abschnitts des Gas-Säure-Kontaktors strömen, und wobei beim Kontaktschritt (d) ein Verhältnis (Qg1 / (Q0 + Q2) ) zwischen einem Massendurchsatz Qg1 des in den Gas-Säure-Kontaktor (1) eingeführten Verbrennungsgases G1 und einem gesamten Massendurchsatz (Q0 + Q2) des Kontaktzufuhrstroms F0 und des Rückführstroms F2, die in den Gas-Säure-Kontaktor (1) eingeführt werden, zwischen 0,1 und 50 %, vorzugsweise zwischen 0,5 und 10 %, noch mehr bevorzugt zwischen 1 und 7 % beträgt.

11. Vorrichtung zur Herstellung von gereinigter Phosphorsäure P3 gemäß einem Verfahren nach einem der vorhergehenden Ansprüche, die Folgendes umfasst:
(A) eine Brennkammer (2), die Folgendes aufweist:
• einen Zerstäubungseinlass (2pu) in die Brennkammer, der die Einführung einer angereicherten Phosphorsäurelösung P1 in zerstäubter Form mit einem Durchsatz in eine Verbrennungseinheit (2c) ermöglicht,
• einen Rückstandseinlass (2pdu) in die Brennkammer oder vor dem Zerstäubungseinlass (2pu), der die Einführung eines Lösungsrückstands Pr oder einer Mischung von Lösungsrückständen Pr und angereicherter Phosphorsäure (P1) in zerstäubter Form in eine Verbrennungseinheit (2c) ermöglicht,
• wobei die Verbrennungseinheit (2c) im oberen Abschnitt der Brennkammer angeordnet und dazu fähig ist, durch das Verbrennen eines Brennstoffs eine Flamme mit einer Temperatur von mindestens 1500 °C zu bilden, wobei die Verbrennungseinheit Folgendes umfasst:
∘ einen Brenner,
∘ Fluidverbindungen zwischen dem Brenner und einerseits einer Sauerstoffquelle und andererseits einer Brennstoffquelle (10), wodurch eine Versorgung der Flamme ermöglicht wird,
• einen Verbrennungsauslass (2pd) der Brennkammer, um eine Verbrennungslösung P3 in Flüssigphase zurückzugewinnen, und der nach der Verbrennungseinheit angeordnet ist und selbst nach dem Zerstäubungseinlass (2pu) und dem Rückstandseinlass (2pdu) angeordnet ist,
• einen Verbrennungsgas-Abführauslass G1 aus der Flamme,
(B) einen Gas-Säure-Kontaktor (1), der Folgendes umfasst:
• einen Zufuhreinlass (1pu), der mit einer Quelle für eine Zufuhrlösung P0 verbunden ist, wodurch die Einführung eines Kontaktzufuhrdurchsatzes Q0 einer Zufuhrlösung P0 ermöglicht wird,
• einen Verbrennungsgaseinlass (1gu), der die Einführung von Verbrennungsgasen G1 mit einem Durchsatz Qg1 in den Gas-Säure-Kontaktor ermöglicht,
• einen Rückführeinlass (1pru), der mit dem Kontaktzufuhreinlass (1pu) identisch oder davon verschieden ist, der die Einführung einer zurückgeführten angereicherten Phosphorsäurelösung P2 mit einem Rückführdurchsatz Q2 ermöglicht,
• wobei der Zufuhreinlass (1pu) und/oder der Rückführeinlass (1pru) und der Gaseinlass (1gu) so angeordnet sind, dass sie Folgendes ermöglichen, einerseits
∘ einen Kontakt zwischen dem Zufuhrstrom F0 und dem Rückführstrom F2, um einen Strom einer Mischung der Zufuhrlösung P0 und der zurückgeführten angereicherten Phosphorsäurelösung P2 zu bilden, und andererseits
∘ einen Kontakt zwischen der so gebildeten Mischung mit den Verbrennungsgasen G1,
• einen oder mehrere Auslässe (1pd) für angereicherte Phosphorsäure,
(C) eine Verbrennungsgas-Fluidverbindung (6), die ein mit dem Verbrennungsgas-Abführauslass der Brennkammer (2) gekoppeltes Ende (6u) mit einem mit dem Verbrennungsgaseinlass (1gu) im Gas-Säure-Kontaktor (1) gekoppelten Ende (6d) verbindet,
(D) eine erste Zerstäubungs-Fluidverbindung (3p), die ein gekoppeltes vorgeschaltetes Ende (3u) mit Folgendem verbindet:
• mit dem Auslass (1pd) für angereicherte Phosphorsäure des Gas-Säure-Kontaktors (1) oder
• mit einer Verzweigungsstelle (5) mit einer ersten Fluidverbindung (3), die mit dem Auslass (1pd) für angereicherte Phosphorsäure gekoppelt ist,
mit einem nachgeschalteten Ende (3d), das mit dem Einlass (2pu) für angereicherte Phosphorsäure in der Brennkammer (2) gekoppelt ist,
**dadurch gekennzeichnet, dass** die Vorrichtung darüber hinaus Folgendes umfasst:
(E) eine Rückführ-Fluidverbindung (3r), die ein gekoppeltes vorgeschaltetes Ende mit Folgendem verbindet:
• mit einem Auslass (1pd) für zurückgeführte angereicherte Phosphorsäure des Gas-Säure-Kontaktors (1) oder
• mit einer Verzweigungsstelle (5) mit der ersten Fluidverbindung (3),
mit einem gekoppelten nachgeschalteten Ende,
• mit einem Rückführeinlass (1pru) des Gas-Säure-Kontaktors (1) oder
• mit einer Zufuhrverbindung (3a) zur Zufuhr der Zufuhrlösung P0 zum Gas-Säure-Kontaktor und
(F) Mittel zur Steuerung und zur Beibehaltung eines Verhältnisses Qp / (Qp + Q2) zwischen einem Zerstäubungsmassendurchsatz Qp, der in der Zerstäubungs-Fluidverbindung (3p) fließt, und einem gesamten Massendurchsatz (Qp + Q2), der als Summe des Zerstäubungsmassendurchsatzes Qp und eines Rückführmassendurchsatzes Q2, der in der Rückführ-Fluidverbindung (3r) fließt, auf einen Wert von weniger als 50 %, vorzugsweise weniger als 10 %, vorzugsweise weniger als 5 %, noch mehr bevorzugt weniger als 2,5 %, und wobei das Verhältnis Qp / (Qp + Q2) einen Wert von mehr als 0,1 %, vorzugsweise mehr als 0,5 % aufweist.

12. Vorrichtung nach Anspruch 11, wobei sich der Rückstandseinlass (2pdu) in Fluidkommunikation mit einer Quelle für einen Lösungsrückstand Pr befindet, der wässrig ist und Phosphormoleküle in Form von Orthophosphat und/oder Polyphosphat und unerwünschte verdampfbare Stoffe umfasst.

## Claims

1. Process for purifying an aqueous residual solution comprising phosphorus molecules and undesirable volatilizable materials, comprising the following steps:
(a) introducing into a gas-acid contactor (1) a feed stream F0 of a feed solution P0 which is aqueous and comprising phosphorus molecules preferably in the form of species of orthophosphate type at a mass concentration, xp0, of between 0 and 54% equivalent of P₂O₅ units,
(b) introducing into the gas-acid contactor (1) a recirculation stream F2 of recirculated enriched phosphoric acid P2,
(c) introducing into the gas-acid contactor (1) combustion gases G1,
(d) contacting the feed stream F0 and the recirculation stream F2 and the combustion gases G1 to form in the gas-acid contactor, on the one hand,
• an enriched phosphoric acid solution P1 comprising a mass concentration, xp1, with a P₂O₅ content which is greater than xp0 (xp1 > xp0) and, on the other hand,
• contacted combustion gases G3,
(e) separating the contacted combustion gases G3 from the enriched phosphoric acid solution P1, and then
• evacuating the contacted combustion gases G3 from the gas-acid contactor (1), and
• removing the enriched phosphoric acid solution P1 from the gas-acid contactor (1),
(f) forming from said enriched phosphoric acid solution P1, on the one hand,
• a recirculation stream F2 of recirculated enriched phosphoric acid solution P2 to introduce it into the gas-acid contactor (1) as defined in step (b) and, on the other hand,
• a spraying stream Fp of the enriched phosphoric acid solution P1 to introduce it into a combustion chamber (2),
(g) spraying through a flame burning in the upper part of the combustion chamber (2) a mixing stream Fm of a mixing solution (Pm) comprising phosphorus at a mass concentration, xpm, and undesirable volatilizable materials, the mixing stream being formed by, on the one hand,
• the enriched phosphoric acid solution P1 and optionally, on the other hand,
• a residual steam Fr of an aqueous residual solution Pr comprising a mass concentration, xpr, of at least 1% P₂O₅,
to:
• evaporate the water and thus concentrate the mixing solution Pm,
• optionally oxidize and in any case evaporate the undesirable volatilizable impurities,
• form combustion gases G1, and
• form a combustion solution P3 having
- a mass concentration, xp3, of P₂O₅ which is higher than the concentration of the mixing solution Pm, and
- a content of volatilizable impurities which is lower than that of the mixing solution Pm,
(h) separating the combustion solution P3 from the combustion gases G1 and
• recovering the combustion solution P3, and
• transferring the combustion gases G1 into the gas-acid contactor (1) as defined in step (c).

2. Process according to Claim 1, in which
• the feed solution P0 comprises a concentration xp0 of between 0.1% and 50%, preferably from 1% to 35%, preferably from 5% to 20% P₂O₅ and in which
• a flow rate Q0 of the feed solution P0 into the contactor expressed in terms of per nominal power units [MW⁻¹] of the combustion chamber is preferably between 100 and 3000 kg/(h MW), preferably between 500 and 2500 kg/(h MW).

3. Process according to Claim 1 or 2, in which
• the enriched phosphoric acid solution P1 is identical to the recirculated enriched phosphoric acid solution P2 and comprises a phosphorus concentration xp1 of greater than or equal to 1%, preferably less than 60%, more preferably between 5% and 50%, preferably between 10% and 40% P₂O₅ and in which
• a total flow rate, Q1 = (Qp + Q2), of the solution P1 out of the contactor expressed in terms of per nominal power units [MW⁻¹] of the combustion chamber is preferably between 600 and 123 000 kg/ (h MW) , preferably between 1000 and 50 000 kg/(h MW) and
• a ratio, Qp /(Qp + Q2), between the mass flow rate Qp of the spraying stream Fp and the total mass flow rate (Qp + Q2) is preferably less than 50%, preferably less than 10%, preferably less than 5%, more preferably less than 2.5% and in which the ratio Qp / (Qp + Q2) is greater than 0.1%, preferably greater than 0.5%.

4. Process according to any one of the preceding claims, in which
• the residual solution Pr comprises a phosphorus concentration xpr of greater than or equal to 2%, preferably at least 5%, more preferably at least 10%, preferably at least 20% P₂O₅.
• the residual solution Pr comprises a concentration xpv of undesirable volatilizable materials of at least 5 ppm, preferably at least 10 ppm, preferably at least 100 ppm, preferably at least 1%, preferably at least 5%, preferably at least 10%, more preferably at least 25% by weight relative to the total weight of the solution, and in which
• a flow rate Qr of the residual solution Pr in the combustion chamber expressed in nominal power units [MW⁻¹] of the combustion chamber is non-zero and preferably between 5 and 1500 kg/(h MW), preferably between 400 and 1000 kg/(h MW).

5. Process according to any one of the preceding claims, in which
• a ratio Qr/ (Qr + Q0) is between 0 and 99%, preferably between 5% and 90%, more preferably between 10% and 80%, or between 15% and 45%, and in which
• the mixing stream (Fm) comprises a phosphorus concentration (xpm) of greater than 1% P₂O₅ (xpm > 1% P₂O₅)
and in which Q0, Qp and Qr are mass flow rates of the feed solution (P0), of the enriched phosphoric acid solution P1 and of the residual solution Pr, respectively.

6. Process according to any one of the preceding claims, in which
• the mixing solution Pm comprises a concentration xpm of greater than 2%, preferably greater than 5%, more preferably greater than 20%, more preferably greater than 30%, preferably greater than 40%, and more preferably between 45% and 60% P₂O₅,
• the mixing solution Pm comprises a concentration xpv of undesirable volatilizable materials of at least 5 ppm, preferably of at least 10 ppm, preferably of at least 100 ppm, preferably of at least 1%, preferably of at least 5%, preferably of at least 10%, more preferably of at least 25% by weight relative to the total weight of the solution, and in which
• a flowrate Qm of the mixing solution Pm in the combustion chamber expressed in terms of per nominal power units [MW⁻¹] of the combustion chamber is preferably between 305 and 3000 kg/(h MW), preferably between 200 and 2000 kg/(h MW).

7. Process according to any one of the preceding claims, in which
• the combustion solution P3 comprises a phosphorus concentration xp3 of greater than 1% equivalent of P₂O₅ units, preferably greater than 10%, preferably greater than 25%, particularly preferably greater than 40%, or is preferably between 30% and 76%, and in which
• the flow rate Q3 of the combustion solution P3 outside the combustion chamber expressed in nominal power units [MW⁻¹] of the combustion chamber is preferably between 240 and 1500 kg/(h MW), preferably between 600 and 3000 kg/(h MW).

8. Process according to any one of the preceding claims, in which the feed stream F0 and the recirculation stream F2 are either
• mixed before they are introduced into the gas-acid contactor to form a stream of a mixture of the feed solution P0 and of the recirculated enriched phosphoric acid solution P2, or
• contacted after having been introduced separately into the gas-acid contactor to form a stream of a mixture of the feed solution P0 and of the recirculated enriched phosphoric acid solution P2.

9. Process according to any one of the preceding claims, in which
• a residual flow rate Qr of the residual solution Pr is non-zero,
• the residual solution Pr and, preferably, the spraying solution Pp comprise undesirable volatilizable materials, and in which
the residual stream Fr and the spraying stream Fp are either
• mixed to form the mixing stream Fm before being sprayed into the flame in the combustion chamber, or
• sprayed separately into the combustion chamber to form the mixing stream Fm in the flame or just before reaching the flame.

10. Process according to any one of the preceding claims, in which the contact between the feed stream F0 and the recirculation stream F2 and the combustion gases G1 in step (d) takes place co-currently or countercurrently, preferably co-currently by flowing from an upper part to a lower part of the gas-acid contactor and in which, during the contact step (d), a ratio (Qg1/(Q0 + Q2)) between a mass flow rate Qg1 of the combustion gas G1 introduced into the gas-acid contactor (1) and a total mass flow rate (Q0 + Q2) of the contact feed stream F0 and the recirculation stream F2 introduced into the gas-acid contactor (1), is between 0.1% and 50%, preferably between 0.5% and 10%, more preferably between 1% and 7%.

11. Device for producing purified phosphoric acid P3 according to a process according to any one of the preceding claims, comprising:
(A) a combustion chamber (2) having:
• a spraying inlet (2pu) in the combustion chamber for introducing at a flow rate an enriched phosphoric acid solution P1 in sprayed form into a combustion unit (2c),
• a residue inlet (2pdu) in the combustion chamber or upstream of the spraying inlet (2pu) for introducing a residual solution Pr or a mixture of residual solution Pr and of enriched phosphoric acid solution (P1) in sprayed form into a combustion unit (2c),
• the combustion unit (2c) being arranged in the upper part of the combustion chamber, and being capable of forming a flame having a temperature of at least 1500°C by combustion of a combustible, said combustion unit comprising:
o a burner,
∘ fluid connections between the burner and, on the one hand, an oxygen source and, on the other hand, a combustible source (10) for feeding the flame,
• a combustion outlet (2pd) of the combustion chamber for recovering a combustion solution P3 in liquid phase, and arranged downstream of the combustion unit, which is itself arranged downstream of the spraying (2pu) and residue (2pdu) inlet,
• an evacuation outlet for combustion gases G1 obtained from the flame,
(B) a gas-acid contactor (1) having
• a feed inlet (1pu) connected to a source of a feed solution P0, for introducing at a contact feed flow rate Q0 a feed solution P0,
• a combustion gas inlet (1gu) for introducing into the gas-acid contactor combustion gases G1 at a flow rate Qg1,
• a recirculation inlet (1pru) which is identical to or different from the contact feed inlet (1pu), for introducing a recirculated enriched phosphoric acid solution P2 at a recirculation flow rate Q2,
• the feed (1pu) and/or recirculation (1pru) inlets and the gas inlet (1gu) being arranged to allow, on the one hand,
∘ contact between the feed stream F0 and the recirculation stream F2 to form a stream of a mixture of the feed solution P0 and of the recirculated enriched phosphoric acid solution P2 and, on the other hand
∘ contact of the mixture thus formed with the combustion gases G1,
• one or more enriched phosphoric acid outlets (1pd),
(C) a combustion gas fluidic connection (6) connecting an end (6u) coupled to the combustion gas evacuation outlet of the combustion chamber (2), to an end (6d) coupled to the combustion gas inlet (1gu) in the gas-acid contactor (1),
(D) a first spraying fluidic connection (3p) connecting an upstream end (3u) coupled
• to the enriched phosphoric acid outlet (1pd) of the gas-acid contactor (1) or
• to a branching point (5) with a first fluidic connection (3) which is coupled to the enriched phosphoric acid outlet (1pd), to a downstream end (3d) coupled to the enriched phosphoric acid inlet (2pu) in the combustion chamber (2),
**characterized in that** the device also comprises
(E) a recirculation fluidic connection (3r) connecting an upstream end coupled
• to a recirculated enriched phosphoric acid outlet (1pd) of the gas-acid contactor (1) or
• to a branching point (5) with the first fluidic connection (3),
to a downstream end coupled
• to the recirculation inlet (1pru) of the gas-acid contactor (1) or
• to a feed connection (3a) feeding the gas-acid contactor with feed solution P0, and
(F) means for controlling and maintaining a ratio, Qp/(Qp + Q2), between a spraying mass flow rate Qp flowing in the spraying fluidic connection (3p) and a total mass flow rate (Qp + Q2) defined as the sum of the spraying mass flow rate Qp and of a recirculation mass flow rate Q2 flowing in the recirculation fluidic connection (3r) at a value of less than 50%, preferably less than 10%, preferably less than 5%, more preferably less than 2.5% and in which the ratio Qp / (Qp + Q2) has a value of greater than 0.1%, preferably greater than 0.5%.

12. Device according to Claim 11, in which the residue inlet (2pdu) is in fluidic communication with a source of a residual solution Pr which is aqueous and comprises phosphorus molecules in orthophosphate and/or polyphosphate form and undesirable volatilizable materials.
